# EUROPEAN PATENT SPECIFICATION

(11) **EP 2 575 035 B1**
(45) Date of publication and mention of the grant of the patent: **22.04.2020**
(21) Application number: 12178172.8
(22) Date of filing: 27.07.2012
(51) Int. Cl.: G06F 9/44

(54) **Object data allocation method, object data allocation system and server apparatus, client device and program thereof**
Objektdatenzuweisungsverfahren, Objektdatenzuweisungssystem und Servervorrichtung, Client-Vorrichtung und Programm dafür
Procédé d'attribution de données d'objet, système d'allocation de données d'objet et appareil serveur, dispositif client et programme associé

(30) Priority: 28.09.2011 JP 2011211880
(43) Date of publication of application: 03.04.2013
(73) Proprietor: Clarion Co., Ltd., Saitama 330-0081 (JP)
(72) Inventor: Nagai, Yasushi, Chiyoda-ku, Tokyo 100-8220 (JP); Shimizu, Atsushi, Chiyoda-ku, Tokyo 100-8220 (JP)
(74) Representative: Mewburn Ellis LLP

(56) References cited:
- US-A1- 2006 258 344
- US-A1- 2007 100 907
- US-B1- 7 669 195

## Description

### BACKGROUND

The subject matter as set forth in this description relates to a technique for reducing a data amount in the event of delivering data, such as contents, software programs or the like, between apparatuses.

A land vehicle navigation apparatus (also called the car navigation device) is generally used, which is mounted in the interior of a vehicle for providing services including showing to users a land map and its associated information and also performing road guidance for determining a geographical route to a destination location. The car-mounted, i.e. vehicle-mounted, navigation device is unified with the vehicle and is low in update/revision frequency of information and program: in many cases, even an old device is continuously used for a long period of time, e.g., for seven to ten years. The in-vehicle device's program is updatable at dealers or outlet stores; however, this requires a user to bring his or her in-vehicle device in one of the stores, resulting in an increase in time-consuming and troublesome task.

In recent years, the in-vehicle device becomes connectable to various types of servers via a cellular or "mobile" telephone handset or a wireless router, thereby making it possible to provide services using networks. In addition, by using an in-vehicle device with radio network connectivity, it is also possible to provide services using an always-on connection network.

Network-used services include program distribution and updating. Using such network-used program updating scheme makes it possible to notify the need for program revision to all network-linked in-vehicle devices over a network. Further, upon issuance of an update/revision request by a user of an in-vehicle device which has received the notice, an updating operation gets started immediately without suffering from any complicated procedures, such as sending by mail or home-delivery a renewal notice and a compact disc (CD) or a secure digital (SD) memory card, resulting in decreases in time consumption and troublesome work.

With the aforementioned download-based program/data updating scheme, the revision of program and data is enabled regardless of time and location; so, the updating process becomes easier. In other words, by establishment of a network-used program update system, it becomes possible to achieve rapid provision of new functions to in-vehicle device users while improving the efficiency of revision relating to fixing defects, such as bugs.

Prior known techniques for performing program distribution and updating services are disclosed, for example, in JP-A-2010-79546 and US 2003/0212712 A1.

JP-A-2010-79546 discloses therein a "program distribution/updating system." With this program distribution/updating system, it becomes possible to perform via a network the updating of software programs, including first-edition program (for detail, see Abstract, Claim 1 and Paragraph No. 0014).

US 2003/0212712 A1 discloses therein "byte-level file differencing and updating algorithms." With the technique for acquiring a difference between original data (original file) and new data (new file) on a binary level in the way as taught thereby, it is possible to reduce the download data amount of a program targeted for revision or updating, thereby making it possible to shorten the length of a download time period (see Paragraph Nos. 0026 to 0031).

US 2006/0258344 discloses a mobile handset in a mobile services network, with access to a plurality of services including a firmware/software update service, which is also capable of updating its update agent using an appropriate update package that is retrieved from an update package repository via a management server. A generator with nodes preprocessor is used to create an update package and associated information, such as nodes information and filter information, by comparing two different versions of the fireware.software of the mobile handset.

### SUMMARY

The technique disclosed in JP-A-2010-79546 fails to take into consideration the reduction of data amount. In cases where the program to be installed is large in size, the download time and updating time become longer, resulting in unwanted generation of a time period in which no functions of in-vehicle device are utilizable. In addition, there is a foreseeable risk that the network's frequency band runs down for the downloading process, thereby making it difficult to achieve comfortable utilization of on-network services during the downloading. Furthermore, long-time power-on state is unable to be maintained at all times due to a limit to the capacity of a battery module of in-vehicle device. This yields, in some cases, the risk of a failure to complete the intended updating within the limited power-on time period.

The technique disclosed in US 2003/0212712 A1 is faced with a program which follows. In the case of installation of a first-edition program, its original file is absent in the in-vehicle device; so, it is impossible to acquire a difference between the original file and new file. This makes it impossible to lessen the amount of download data.

As has been stated above, regarding the updating of a program with its original data (original file) being held in the in-vehicle device, various approaches are known as to efficient program download methodology, installation method, and download data amount reduction method. However, as for the first-edition program with its original data (original file) being not held in the in-vehicle device, no effective methods are known. Similar problems exist in regard to various kinds of contents other than programs, such as in-vehicle navigation maps, point-of-interest (POI) information and telephone directories.

Accordingly, it is desired to provide an efficient download method capable of reducing a data amount during distribution of even first-edition programs and contents (hereinafter, these will be collectively referred to as data).

Disclosed in this description are an object data allocation method capable of reducing a data amount in the event that the target data to be delivered (referred to hereinafter as object data), such as contents and programs or else, is transferred for placement in client equipment, such as an in-vehicle device, an object data allocation system using the method, a server apparatus for use in the allocation system, a client device used in the system, and a software program for use therein.

For example, in a system including a server apparatus and a client device which are coupled together via a network, an object data allocation method for sending object data stored in the server apparatus to the client device for placement or "deployment" therein is disclosed.

The presently claimed invention provides a system as set forth in claim 1.

The presently claimed invention also provides a server apparatus adapted to be used in an object data allocation system for placing object data of the server apparatus in a client device, according to claim 6.

The presently claimed invention also provides a client device adapted to be used in an object data allocation system for placing object data of a server apparatus in the client device, according to claim 7.

The presently claimed invention also provides a method of object data allocation according to claim 8.

Further, the object data allocation system and the method of object data allocation may operate according to the dependent claims.

In accordance with the above-stated aspects, the use of data held by the in-vehicle device leads to reduction of communication data amount, thereby making it possible to save communication time and reduce communication costs.

In accordance with the technique as disclosed herein, it becomes possible to lessen the communication data amount in the event of allocating or "placing" object data including data and/or programs, thereby enabling reduction of communication time and communication costs.

These and other benefits are described throughout the present specification. A further understanding of the nature and advantages of the invention may be realized by reference to the remaining portions of the specification and the attached drawings.

Other objects, features and advantages of the invention will become apparent from the following description of the embodiments of the invention taken in conjunction with the accompanying drawings.

### BRIEF DESCRIPTION OF DRAWINGS

Fig. 1 is a diagram showing an exemplary hardware configuration of a system in accordance with one embodiment.
Fig. 2 illustrates one exemplary structure of an in-vehicle device data table 111 for managing in-vehicle device data 117 by a server 102, wherein the data is a data group stored in an in-vehicle device 101.
Fig. 3 shows an exemplary structure of a difference data table 112 for managing so as to enable in the server 102 to specify allocation information and difference data to be delivered to the in-vehicle device 101 from the information being notified from the in-vehicle device 101.
Fig. 4 is a diagram showing exemplary structures of allocation information 409 and difference data 412 of the illustrative embodiment.
Fig. 5 is a diagram showing an exemplary procedure for creating the allocation information 409 and difference data 412 in the server 102 of the embodiment.
Fig. 6 is a diagram exemplifying a procedure of restructuring, for installation, object data 114 from the placement information 409 and difference data 412 in the in-vehicle device 101 of the embodiment.
Fig. 7 is a diagram exemplifying a sequence for allowing the in-vehicle device 101 of the embodiment to download data from the server 102 and install the data.
Fig. 8 is a diagram exemplifying a structure of difference data 801 of an embodiment.
Fig. 9 is a diagram exemplifying a procedure for creating allocation information 409 and difference data 801 in a server 102 of the embodiment.
Fig. 10 is a diagram exemplifying a procedure of restructuring object data 114 from the allocation information 409 and difference data 801 in an in-vehicle device 101 of the embodiment.
Fig. 11 is a diagram exemplifying a sequence for letting the in-vehicle device 101 of the embodiment to download data from the server 102 for installation.
Fig. 12 is a diagram exemplifying structures of distribution data by use of a compression technique of an embodiment.
Fig. 13 shows one exemplary structure of a difference data table 112 for managing, in a server 102 of the embodiment, the distribution data to be delivered to an in-vehicle device 101 in such a way that the data is specifiable based on information to be notified from the in-vehicle device 101.
Fig. 14 is a diagram exemplifying a procedure for registering distribution data to the difference data table in the server 102 of the embodiment.
Fig. 15 is a diagram exemplifying a procedure for restructuring object data 114 from the distribution data in the in-vehicle device 101 of the embodiment.

### DESCRIPTION OF THE EMBODIMENTS

Embodiments will be described with reference to the accompanying drawings below.

### Embodiment 1

In this embodiment, an explanation will be given of an example which transmits a software program stored in a server and various kinds of contents including but not limited to land map data, point-of-interest (POI) information and phonebook (these will be referred to as "object data" hereinafter) to an in-vehicle navigation device which is coupled or linked to the server via a network.

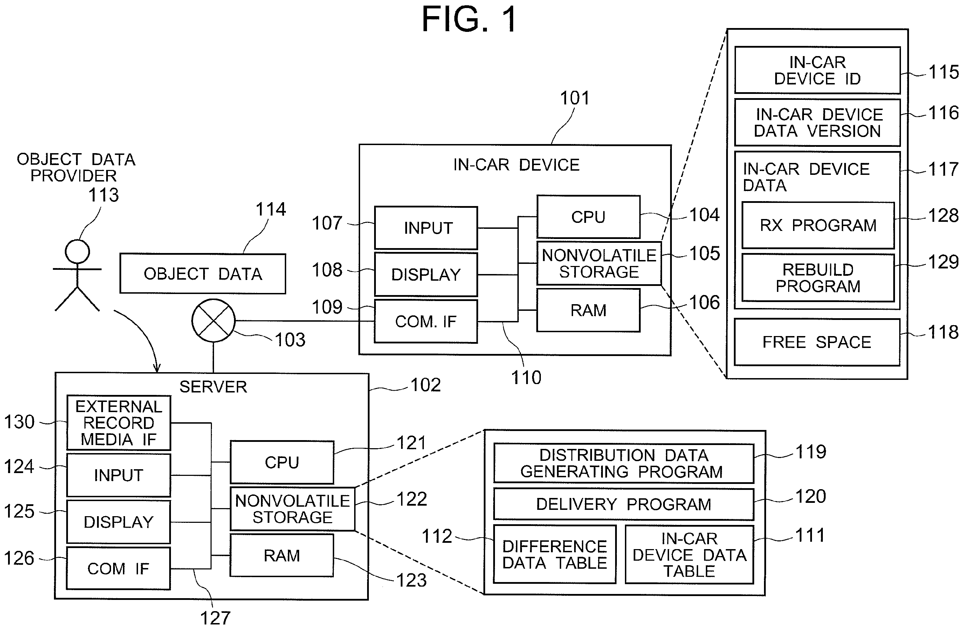

Fig. 1 is a diagram showing an exemplary hardware configuration of an in-vehicle device data download system in accordance with one embodiment.

The in-vehicle device data download system of Fig. 1 is arranged to include an in-vehicle navigation device 101, a server 102 and a network 103 for communicable connection thereof.

The server 102 extracts analogous data similar to object data 114 from in-vehicle device data 117 which is a group of data held by the in-vehicle device 101, prepares allocation or "placement" information for restoring the extracted analogous data on the in-vehicle device 101's side, compares the analogous data with the object data 114, creates difference data indicative of a difference or differences therebetween, and delivers distribution data including the difference data and the allocation information to the in-vehicle device 101.

The in-vehicle device 101 creates analogous data from the in-vehicle device data 117 that is its retaining data group in accordance with the allocation information contained in the received distribution data, performs restructuring (also known as restoring) of the object data 114 by using the created analogous data and the received difference data, and installs the object data.

It should be noted that the installation in this embodiment is defined to be an operation or process of writing the object data 114, such as a program or contents or the like, into a non-volatile storage device 105 or a random-access memory (RAM) 106 in a usable state. The nonvolatile storage 105 and RAM 106 will be later described in detail.

The network 103 is a data communication network with the server 102 linked thereto. The in-vehicle device 101 uses this network to request the server 102 to provide the object data 114 and then downloads the data via the network 103.

The in-vehicle device 101 is arranged to include a central processing unit (CPU) 104, nonvolatile storage device 105, random-access memory (RAM) 106, input device 107, display device 108, communication interface (IF) 109, and internal communication line (called the bus) 110, such as bus lines for interconnection among these parts or components. The CPU 104 controls the nonvolatile storage device 105, RAM 106, input device 107, display device 108, communication IF 109 and bus 110 and also performs arithmetic operations relating to such control. The control and arithmetic processing are carried out in accordance with a software program being stored in the nonvolatile storage device 105 or the RAM 106.

The nonvolatile storage device 105 is configured from a read-only memory (ROM), flash memory, secure digital (SD) card, hard disk drive (HDD) or other similar storages. In this embodiment the nonvolatile storage device 105 stores therein an in-vehicle device identification (ID) 115, in-vehicle device data version 116 and in-vehicle device data 117. The in-vehicle device ID 115 is the ID inherent to the in-vehicle device 101. The in-vehicle device data version 116 is a version of the in-vehicle device data 117, which is specifiable by the in-vehicle device ID 115 and in-vehicle device data version 116. The in-vehicle device data 117 may typically be a collection of programs and data sets for enabling the in-vehicle device 101 to offer various kinds of services, such as providing a user with routing directions for travel between geographic locations, wherein examples of the data 117 are files, land map graphics images, POI information and other similar information items. A free space 118 is a storage area for saving various data, such as new version of programs, data files, etc.

A receiving program 128 and restructuring program 129 are certain kinds of data being stored in the in-vehicle device data 117. The reception program 128 is a software program that issues and sends to the server 102 a request for providing data needed for restructure of the object data 114 and then performs downloading thereof. The restructuring program 129 is a program that restructures or rebuilds the object data 114 from the data downloaded from the server 102.

Although in this embodiment a specific example is shown which contains in the in-vehicle device data 117 an entirety of those data stored in the nonvolatile storage device 105 excluding the in-vehicle device ID 115 and in-vehicle device data version 116, entire data need not to be included in the in-vehicle device data 117. For example, the reception program 128 and restructuring program 129 may be arranged so that these are not contained in the in-vehicle device data 117.

The RAM 106 may typically be a volatile semiconductor memory device, such as dynamic random access memory (DRAM), for storing therein a program to be executed by the CPU 104 and its associative temporary stored information. The input device 107 is a data entry device, such as a keyboard with or without a pointing device called the mouse, a touch-sensitive panel, also known as the touch screen, various types of built-in sensors of the in-vehicle device 101 or the like, any one of which is for notifying the CPU 104 of the user's operations, vehicle's present state and its surrounding external conditions. The display device 108 is constituted from a liquid crystal display (LCD) panel, for visually displaying and informing to the user the CPU 104's computation results, map images, POI information and route guidance information. The communication IF 109 is a wired or wireless data communication interface for connection to the network 103. The communication IF 109 may not be the interface with direct connectivity to the network 103. An example of such interface is an "indirect" interface coupled to a cellular or mobile telephone handset, personal computer (PC) or radio router: the connection to the network 103 may be established by using any one of these devices. The bus 110 is for interconnection of the CPU 104, nonvolatile storage device 105, RAM 106, input device 107, display device 108 and communication IF 109, thereby enabling CPU 104 to control these devices while letting information be transmitted from these devices to CPU 104.

The server 102 is arranged like the in-vehicle device 101 to include a server CPU 121, server nonvolatile storage device 122, server RAM 123, server input device 124, server display device 125, server communication IF 126, server external recording media IF 130, and internal communication line, such as a server bus 127 for interconnection of these server components.

Due to the need to calculate a difference(s) between the in-vehicle device 101's possessing in-vehicle device data 117 and the object data 114, the server 102 has in the server nonvolatile storage device 122 an in-vehicle device data table 111 which enables the in-vehicle device data 117 to be taken out or loaded based on the in-vehicle device ID 115 and in-vehicle device data version 116. Additionally the server 102 has in the server nonvolatile storage device 122 a difference data table 112 which enables difference data to be taken out, which data corresponds to the object data 114 to be delivered to the in-vehicle device 101.

The object data 114 may be data such as a program(s), data files, map images and POI information to be provided by an object data provider (or object data provider's apparatus) 113 and added as needed.

The server 102 also has a distribution data generation program 119 which uses these tables to generate difference data corresponding to the object data 114 to be delivered to the in-vehicle device 101, and a delivering program 120 which extracts difference data corresponding to the object data 114 from the difference data table 112 to which is registered the difference data generated by the distribution data generation program 119 and delivers the difference data extracted.

These programs are saved in the server nonvolatile storage device 122 and are able to be taken out by the server 102 when the need arises. Then, these programs are sent to the server RAM 123 via the server bus 127 for expansion therein and executed by the CPU 121, thereby realizing the server 102's equipping respective functions to be later described.

It is noted here that although each processing to be explained in this embodiment is implemented by a processing unit which is realized by the processor that executes each program in each apparatus or device, an explanation will be given below under the assumption that the program acts as a main execution entity.

The distribution data generation program 119 is a program capable of being operated by the server input device 124 in accordance with an instruction of the object data provider 113, wherein its operation result is displayed on the screen of server display device 125. These server input device 124 and server display device 125 may alternatively be an information processing apparatus (not depicted) coupled to the server 102 via the network 103, such as PC or the like.

The distribution data generation program 119 is a program which determines by computation a difference or differences between the object data 114 to be provided by the object data provider 113 and the in-vehicle device data being stored in the in-vehicle device data table 111, and registers the difference(s) to the difference data table 112. In the case of managing new in-vehicle device data containing therein the object data 114, the program operates to revise or update the in-vehicle device data table 111. The delivering program 120 receives a download request from the in-vehicle device 101 via the server communication IF 126, extracts difference data corresponding to the object data 114 from the difference data table 112, and delivers the extracted data to the in-vehicle device 101 by way of the server communication IF 126.

The object data 114 is stored in an external storage/record media, such as optical disk or disc, nonvolatile semiconductor memory or else, and is written into the server nonvolatile storage device 122 through the server external record media IF 130.

More specifically, the object data provider 113 uses the server input device 124 to render the distribution data generation program 119 operative; then, this program reads the object data 114 stored in the external record media from the server external record media IF 130, adds it to the in-vehicle device data table 111 and updates the difference data table 112. Then, the object data provider 113 checks update results of the in-vehicle device data table 111 and difference data table 112 being displayed on the screen of server display device 125.

The server input device 124, server display device 125 and external record media IF 130 may alternatively be an information processing apparatus (not depicted) linked to the server 102 via the network 103, such as PC or the like. Further, the object data 114 may alternatively be stored in a nonvolatile memory device (not illustrated) rather than in the external record media-of information processing apparatus, such as PC or else, which is coupled to the server 102 via network 103. In this case, the distribution data generation program 119 operated by the object data provider 113 receives the object data 114 from the nonvolatile memory device of the information processing equipment, such as PC or else, which is linked to the server 102 via network 103, adds it to the in-vehicle device data table 111, and updates the difference data table 112.

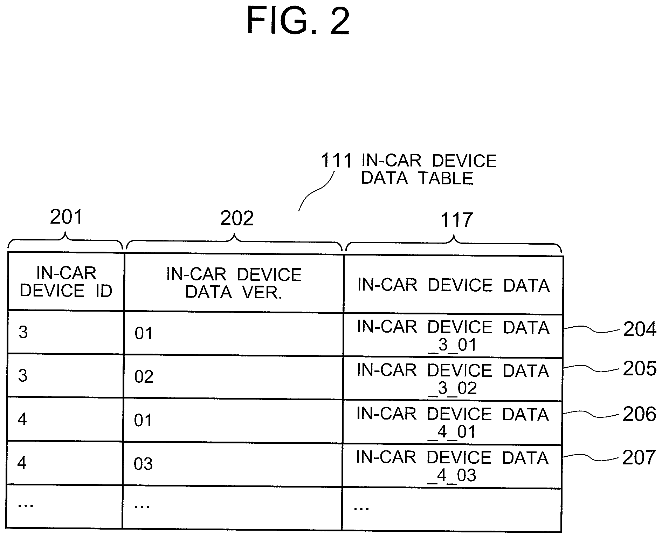

Fig. 2 is a diagram showing an in-vehicle device data table. This is one example of the structure of in-vehicle device data table 111 to be used by the server 102 to manage the in-vehicle device data 117, which is a data group stored in the in-vehicle device 101.

An item 201 labeled "in-car, i.e. vehicle-mounted, device ID" is an ID unique to the in-vehicle, i.e. vehicle-mounted, device; "in-car device data version" 202 is a version of in-vehicle device data; and "in-car device data" 203 is for recitation of in-vehicle device data.

A row 204 is a description concerning a device with its "in-car device ID" being set to "3" and with "in-car device data version" being set at "01." A row 205 is a description concerning a device with "in-car device ID" being set to "3" and with "in-car device data version" being set at "02." A row 206 is a description concerning a device with "in-car device ID" being set to "4" and with "in-car device data version" being set at "01." A row 207 is a description concerning a device with "in-car device ID" being set to "4" and with "in-car device data version" being set at "03."

For example, an "in-car device data" of the device having "in-car device ID" of "3" and "in-car device data version" of "01" is "in-car device data_3_01." An "in-car device data" of the device having "in-car device ID" of "3" and "in-car device data version" of "02" is "in-car device data_3_02." An "in-car device data" of the one having "in-car device ID" of "4" and "in-car device data version" of "01" is "in-car device data_4_01." An "in-car device data" of the one having "in-car device ID" of "4" and "in-car device data version" of "03" is "in-car device data_4_03."

As apparent from the foregoing, this makes it possible for the server 102, by having the in-vehicle device data table 111 capable of specifying the in-vehicle device data 117 that is the data group stored in the in-vehicle device 101, to deliver a reduced amount of data after having calculated a difference(s) between the in-vehicle device data 117 and the object data 114.

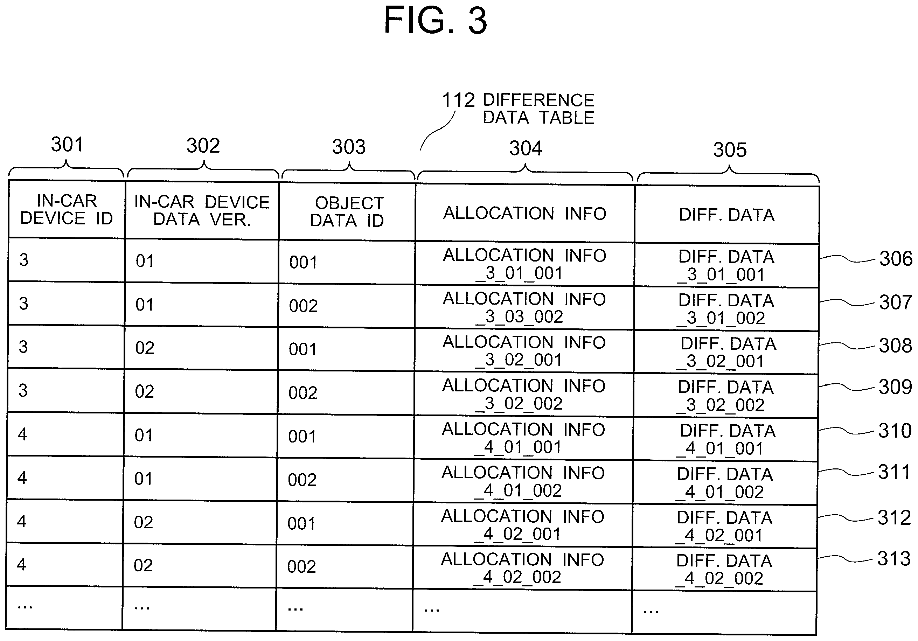

Fig. 3 is a diagram showing a difference data table. This is one exemplary structure of the difference data table 112 to be used by the server 102 to manage "allocation information" 304 and "difference data" 305 to be delivered to the in-vehicle device 101 in such a way that these are specifiable based on the information to be notified from the in-vehicle device 101.

In Fig. 3, an item named "in-car device ID" 301 is an ID unique to in-vehicle device. An "in-car device data version" 302 is a version of in-vehicle device data. "Object data ID" 303 is an ID unique to the object data and capable of specifying the object data. By managing the "allocation information" 304 and "difference data" 305 using these IDs and versions, it is possible to select various types of in-vehicle devices and choose the "allocation information" 304 and "difference data" 305 which are suitable for an in-vehicle device different in situation and data content, such as installed programs and stored contents.

Note here that the "allocation information" 304 refers to placement information (such as address, block size, etc.) within the in-vehicle device data for specifying analogous data targeted for comparison in the process of preparing the "difference data" 305 to be delivered, as will be later described in detail.

Also note that the "difference data" 305 is a set of data indicative of differences between the object data and the analogous data, which has been created by coupling one or a plurality of analogous blocks that are extracted from the in-vehicle device data in accordance with the allocation information in an order of sequence pursuant to the allocation information.

In this embodiment, an example is shown which stores to-be-delivered difference data and allocation information in the difference data table 112. However, in view of the fact that the difference data and allocation information become a relatively large volumes of data, an arrangement may be employed for creating each of them as a file to be stored in the nonvolatile storage device 122, for saving in the column of "allocation information" 304 a file name for specifying a file storing therein corresponding allocation information and a path of a directory storing the file therein, and for saving in the column of "difference data" 305 a file name for specifying a file storing therein corresponding difference data and a path of the file-storing directory.

A row 306 is a description concerning a device having its "in-car device ID" of "3" and "in-car device data version" of "01" and also having "object data ID" of "001." Arow 307 is a description as to a device having "in-car device ID" of "3" and "in-car device data version" of "01" and also having "object data ID" of "002." Arow 308 is a description as to a device having "in-car device ID" of "3" and "in-car device data version" of "02" and also having "object data ID" of "001." A row 309 is a description as to a device having "in-car device ID" of "3" and "in-car device data version" of "02" and also having "object data ID" of "002." A row 310 is a description as to a device having "in-car device ID" of "4" and "in-car device data version" of "01" and also having "object data ID" of "001." A row 311 is a description as to a device having "in-car device ID" of "4" and "in-car device data version" of "01" and also having "object data ID" of "002." A row 312 is a description as to a device having "in-car device ID" of "4" and "in-car device data version" of "02" and also having "object data ID" of "001." A row 313 is a description as to a device having "in-car device ID" of "4" and "in-car device data version" of "02" and also having "object data ID" of "002."

For example, "allocation information" and "difference data" of the one having "in-car device ID" of "3," "in-car device data version" of "01" and "object data ID" of "001" are "allocation information _3_01_001" and "difference data_3_01_001." Allocation information and difference data of the one having "in-car device ID" of "3," "in-car device data version" of "01" and "Object Data ID" of "002" are "allocation information_3_01_002" and "difference data_3_01_002." Allocation information and difference data of the one having "in-car device ID" of "3," "in-car device data version" of "02" and "object data ID" of "001" are "allocation information_3_02_001" and "difference data_3_02_001." Allocation information and difference data of the one having "in-car device ID" of "3," "in-car device data version" of "02" and "object data ID" of "002" are "allocation information_3_02_002" and "difference data_3_02_002." Allocation information and difference data of the one having "in-car device ID" of "4," "in-car device data version" of "01" and "object data ID" of "001" are "allocation information _4_01_001" and "difference data _4_01_001." Allocation information and difference data of the one having "in-car device ID" of "4," "in-car device data version" of "01" and "object data ID" of "002" are "allocation information_4_01_002" and "difference data_4_01_002." Allocation information and difference data of the one having "in-car device ID" of "4," "in-car device data version" of "02" and "object data ID" of "001" are "allocation infbrmation_4_02_001" and "difference data_4_02_001." Allocation information and difference data of the one having "in-car device ID" of "4," "in-car device data version" of "02" and "object data ID" of "002" are "allocation information_4_02_002" and "difference data_4_02_002."

By using the difference data table 112 in this way, it is possible to specify the "allocation information" 304 and "difference data" 305 from the "in-car device ID" 301 that is the type of an in-vehicle device and the "in-car device data version" 302 that is the information for specifying data being installed or stored in the in-vehicle device and usable for difference acquisition and also the "object data" 303 that specifies the data being presently subjected to installation.

In other words, it becomes possible for the server 102 to achieve successful selection and network distribution of the "allocation information" 304 and "difference data" 305 suitable for various types of in-vehicle devices and appropriate for in-vehicle devices different in situation and data contents, such as installed programs and stored contents.

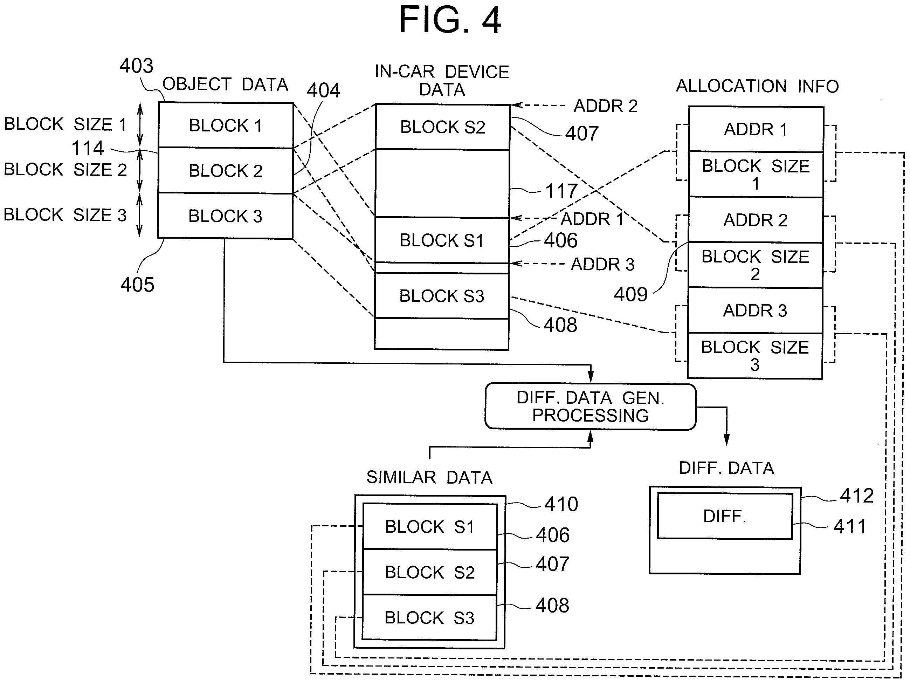

Fig. 4 is a diagram showing exemplary structures of the allocation information and difference data of an embodiment.

Object data 114 corresponds to the object data 114 of Fig. 1. In Fig. 4, an example is shown in which the data is divided into three blocks. Individual blocks divided from the object data 114 are a block No. 1 (#1) 403, block #2 404 and block #3 405. The block #1 403 has its block size 1; the block #2 403 has a block size 2; the block #3 403 has a block size 3.

In-vehicle device data 117 corresponds to the in-vehicle device data 117 of Fig. 1. The in-vehicle device data 117 includes a block S1 406, block S2 407 and block S3 408, which are those similar to the block #1 403, block #2 404 and block #3 405, respectively. Calculation of a difference(s) therebetween results in a decrease in data amount thereof. The degree of similarity is determinable by measurement of a data amount at the time of such difference calculation or alternatively knowable by the longest common sub-string (LCS) length, as taught from US 2003/0212712 A1, or the shortest edit distance (SED).

The block S1 406, block S2 407 and block S3 408 are the same in size as the block #1 403, block #2 404 and block #3 405, respectively. The block size of block S1 406 is equal to the block size 1; the size of block S2 407 is the block size 2; the size of block S3 408 is the block size 3. An initial or "head" address of the block S1 406 is an address 1; a head address of the block S2 407 is an address 2; a head address of the block S3 408 is an address 3.

With the use of such one-to-one correspondence relationship in this way, the in-vehicle device 101 is able to quickly find and take out the data of block S1 406 whenever information of the address 1 and block size 1 is available. In a similar way, the in-vehicle device 101 is able to extract the data of block S2 407 based on the address 2 and block size 2, and extract the data of block S3 408 by using the address 3 and block size 3. Information having a collection of these addresses 1 to 3 and block sizes 1-3 is used as the allocation information 409.

More specifically, the allocation information is the information indicating placement or "deployment" within an in-vehicle device (such as address, block size, etc.) for specifying one or more analogous blocks used to create the analogous data. In the case of two or more analogous data blocks, their coupling order is also specified.

Although in this example the address/block-size information is used to extract a partial block or blocks of the in-vehicle device data 117, in the case of the in-vehicle device data 117 being managed by a file system, data of such partial block(s) is extractable by use of the information indicative of the path name of a directory with the target file being held therein along with its file name, address within the file, and block size. The allocation information 409 may also be constituted from information capable of extracting partial blocks from the in-vehicle data 117. The in-vehicle device data 117 does not necessarily consist of an entirety of the data held by the in-vehicle device 101 and may alternatively be a data group of the in-vehicle device 101 which is currently recognizable by the server 102.

Analogous data 410 is the data with the block S1 406, block S2 407 and block S3 408 being combined together in accordance with the allocation information 409. As the analogous data 410 is obtained by coupling together those blocks each of which is identical in size to one of the blocks obtained by dividing the object data 114, the data is the same in size as the object data 114.

A difference 411 is a difference(s) between the object data 114 and the analogous data 410, which is obtainable by the byte-level file difference detection algorithm disclosed in US 2003/0212712 (Fig. 1). The difference data 412 contains therein the difference 411.

Since the allocation information 409 and difference data 412 are arranged in the way stated above, when the in-vehicle device 101 is able to get these information items, it is possible to obtain the analogous data 410 from the allocation information 409, thereby making it possible to acquire the object data 114 from the analogous data 410 and difference data 412 by the byte-level file updating algorithm taught by US 2003/0212712 (Fig. 1) or like techniques.

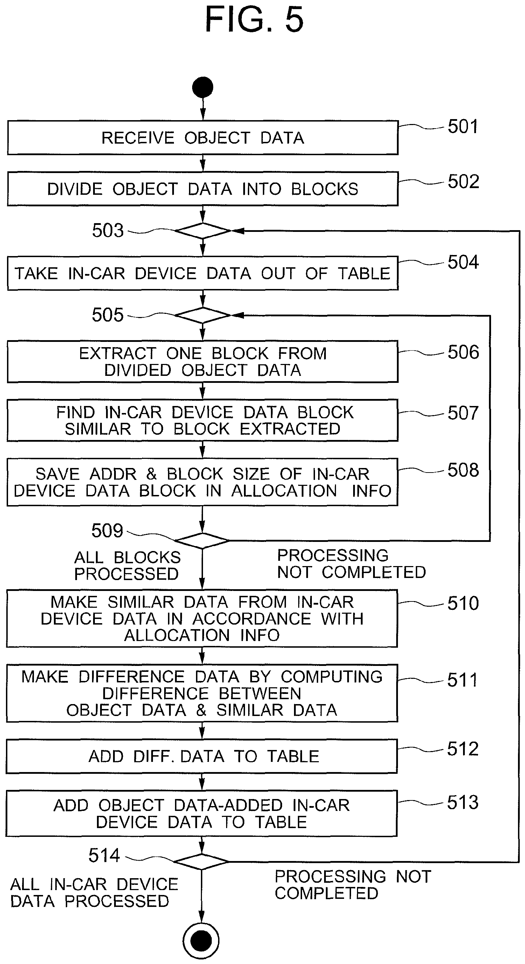

Fig. 5 is a diagram showing an exemplary procedure used in the server 102 of the illustrative embodiment to permit the distribution data generation program 119 to create the allocation information 409 and difference data 412.

First, the distribution data generation program 119 receives object data 114 at step 501.

Then, at step 502, the object data 114 received is divided into a plurality of blocks. In the example of Fig. 4, it is divided into three blocks.

At merge 503, in response to receipt of a processing result of step 502 or branch 514, an operation of step 504 is executed.

In step 504, an operation is performed to take the in-vehicle device data 117 out of the in-vehicle device data table 111.

At merge 505, in response to receipt of a processing result of step 504 or branch 509, operations of steps 506 to 509 are performed to thereby produce allocation information.

In step 506, an operation is performed to take one block out of the divided object data 114.

In step 507, search is conducted to find and extract a block or blocks similar to those extracted at step 506 from within the in-vehicle device data 117 that was taken out at step 504. Although in this example the most similar block is searched, the searching operation may be terminated at the time that a block with its similarity greater than or equal to a predetermined level can be found. Using this approach makes it possible to shorten or minimize a total length of processing time of the server 102. If such one has its similarity greater than or equal to a prespecified level and is sufficiently small in size when the differencing computation is applied thereto, priority may be put to the shortening of the processing time of server 102.

In step 508, an operation is performed to store an address(es) and block size(s) of the block(s) obtained at step 507 in the allocation information 409.

At branch 509, an attempt is made to determine whether the processing operations of steps 506-508 have been applied to all of the blocks divided from the object data 114: depending upon this decision, the procedure will be branched. In case every block has been applied the processing, generation of the allocation information 409 is completed, followed by execution of step 510. If every block has not been processed yet, the procedure returns to the merge 505, for continuing the processing relative to an unprocessed block(s).

In step 510, an operation is performed to create analogous data 410 in accordance with the address(es) and block size(s) of the allocation information 409 prepared at step 508.

In step 511, an operation is performed, as difference data generation processing, to calculate a difference(s) between the object data 114 and the analogous data 410 created at step 510, thereby preparing difference data 412.

At step 512, the difference data 412 prepared at step 511 is added to the difference data table 112. Whereby, it becomes possible to deliver appropriate analogous data 410 and difference data 412 when a request for downloading the object data 114 is issued from the in-vehicle device 101.

In step 513, a new version of in-vehicle device data obtained by adding the object data 114 to the in-vehicle device data 117 taken out at step 504 is added to the in-vehicle device data table 111. Whereby, at the in-vehicle device 101 in which the object data 114 received at step 501 has been installed or stored, it becomes possible to use the object data 114 for data amount reduction of the next object data. The processing of this step is not necessarily applied to every object data. In the case of a sufficiently huge variety of data being held by the in-vehicle device 101 or in the case of capacity reduction of the storage device of server 102, it is possible to increase the efficiency of system by eliminating execution of the processing of this step.

At branch 514, a decision is made as to whether the processing operations of steps 504 to 512 have been executed to all of the in-vehicle device data sets contained in the in-vehicle device data table 111; depending on the decision, the procedure will be branched. If every in-vehicle device data has already been processed, the procedure is terminated. If not, the procedure returns to the merge 503, for continuing the processing stated supra.

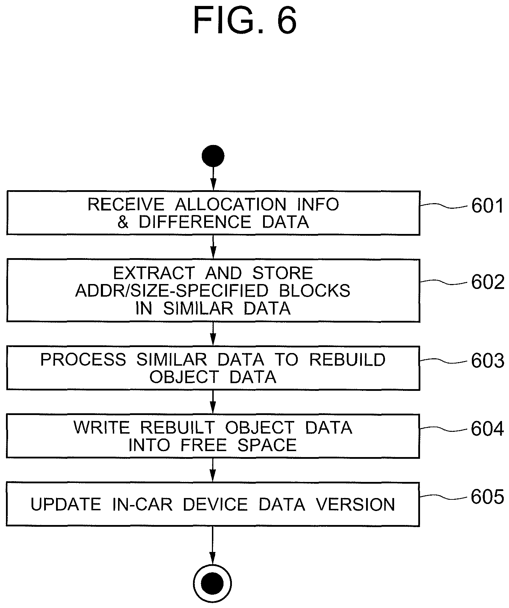

Fig. 6 is a diagram showing an exemplary procedure for allowing, in the in-vehicle device 101 of the embodiment, the restructure program 129 to rebuild object data 114 using allocation information 409 and difference data 412 and install the object data restructured.

The restructure program 129 starts with step 601 which permits the in-vehicle device 101 to receive the allocation information 409 and difference data 412 from the server 102.

Next, at step 602, an operation is performed to take out of the in-vehicle device data 117 a block or blocks which are specified by addresses and block sizes that are recited in the allocation information 409 received at step 601, thereby restructuring the analogous data 410.

In step 603, an operation is performed to restructure the object data 114 based on the analogous data rebuilt at step 602 and the difference data 412 received at step 601.

In step 604, an operation is done to write the object data 114 restructured at step 603 into the free space 118 of the nonvolatile storage device 105 of in-vehicle device 101.

At step 605, an operation is performed to write a version of the new in-vehicle data containing the object data 114 and in-vehicle device data 117 into the in-vehicle device version 116 of nonvolatile storage device 105 of in-vehicle device 101. This operation is not needed in cases where the processing of step 513 is not performed in the server 102.

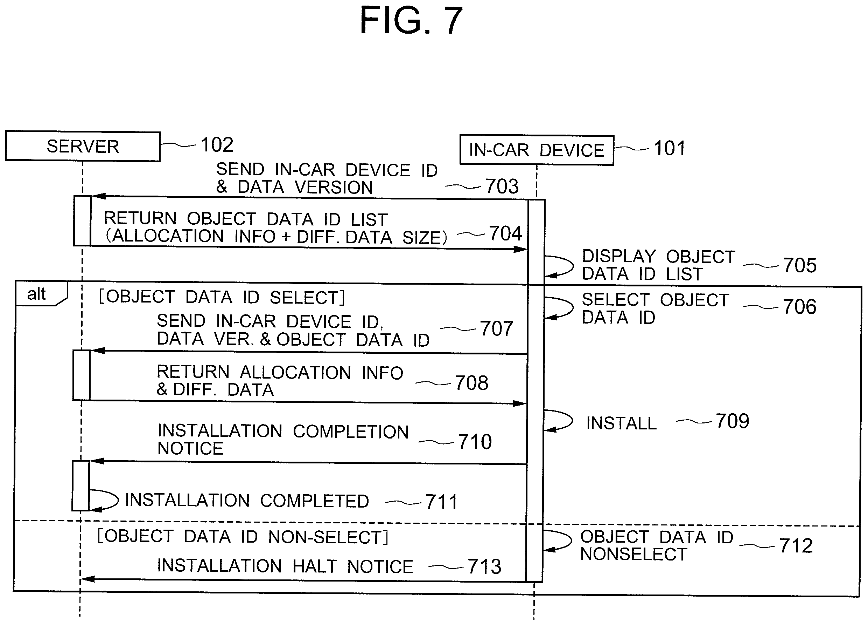

Fig. 7 is a diagram showing an exemplary sequence of letting the in-vehicle device 101 of this embodiment install the data delivered from the server 102.

First, the in-vehicle device 101 performs transmission 703 of in-vehicle device ID and in-vehicle device data version with respect to the server 102. Then, the server 102 performs return transmission 704 of an object data ID list (allocation information + difference data size). Next, the in-vehicle device 101 performs object data ID list displaying processing 705. In this event, it is desirable to display either a download data amount of a respective one of object data IDs or an estimated download time period thereof also in a one-to-one correspondence fashion. With this arrangement, the download time is predictable. This is useful for the user to make a decision as to whether or not the download is now executed. By using this embodiment, the in-vehicle device data 117 changes due to installation of the object data 114 so that a download amount of the next object data is different from that prior to the installation of object data 114. Similarly, in a case where two or more object data IDs are selected while viewing the object data ID list being displayed, either the download data amount or the predicted download time of each object data ID changes depending upon combinations of selected IDs.

In case the user selects object data with a given installation ID after the in-vehicle device 101 completed the object data ID list display processing 705, processing operations 706 to 711 shown in Fig. 7 are performed. In this case, the in-vehicle device 101 performs object data ID selection processing 706. Then, the in-vehicle device 101 transmits (707) an in-vehicle device ID, in-vehicle device data version and object data ID to the server 102. Next, the server 102 sends (708) allocation information and difference data to the in-vehicle device 101 as distribution data. Next, the in-vehicle device 101 performs installation processing 709. This installation processing is executed in accordance with the procedure of Fig. 6. Next, the in-vehicle device 101 sends an installation completion notice 710 to the server 102. Next the server 102 performs installation-completing processing 711.

In case the user does not select any object data of installation ID after the in-vehicle device 101 completed the object data ID list display processing 705, the processing operations 712-713 of Fig. 7 are performed. In this case the in-vehicle device 101 performs object data ID non-selection processing 712. Lastly, the in-vehicle device 101 sends an installation interruption notice 713 to the server 102.

By letting the server 102 and in-vehicle device 101 execute the processing in the above-stated sequence, it is possible for the in-vehicle device 101 to download the allocation information 409 and difference data 412 appropriate for the in-vehicle device 101 and restructure or "rebuild" the object data 114 for installation.

In this embodiment arranged in the manner stated above, even in the case of installing a new edition program whose original data is absent in the in-vehicle device 101, it is possible to reduce the data amount by the differencing process including creating analogous data 410 similar to the data of such new edition program from the in-vehicle device data 117 of in-vehicle device 101.

In cases where the original data is present, it is very likely that blocks of the original data are similar to those of new data; so, it is expectable that an increased number of original data blocks are selected and contained in the analogous data 410. Accordingly, in this embodiment also, it is possible to deliver data with its size equivalent to a difference between the original data and the new data in prior known methods. Note however that in the case of the original data being present, an arrangement is employable-without using this embodiment-for delivering a difference(s) from the original data in order to lessen the server's processing task load.

### Embodiment 2

In this embodiment, there will be described an example of apparatus capable of downloading for installation the data with its size reduced by differencing and also capable of installing correct object data even where the in-vehicle device data and/or difference data is damaged.

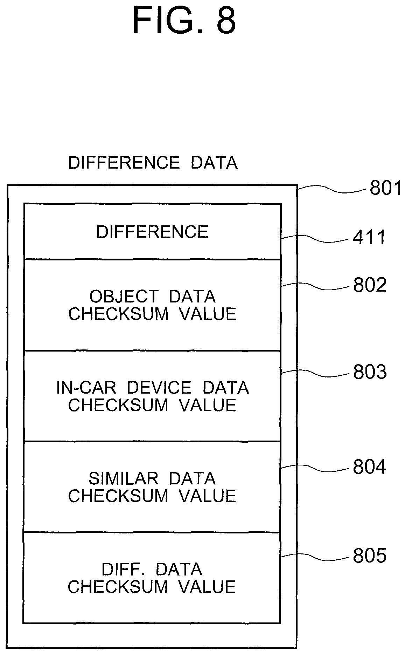

Fig. 8 is a diagram showing an exemplary structure of difference data of the embodiment. An explanation will be eliminated as to a part of the data structure which has the same function as that of the above-stated constituent part designated by the same reference numeral shown in Fig. 4.

The difference data 801 of this embodiment is arranged to include, in addition to the difference 411, an object data check-sum value 802, in-vehicle device data checksum value 803, analogous data checksum value 804 and difference data checksum value 805.

The object data checksum value 802 is a numerical value indicating a calculation result of checksum of the object data 114. In the in-vehicle device 101, the checksum value of the restructured object data 114 is computed, and this value is compared to the object data checksum value 802. If these values are not identical to each other, it is known that the object data 114 was not restructured correctly.

The in-vehicle device data checksum value 803 is a value indicative of a calculation result of checksum of the in-vehicle device data 117. In the in-vehicle device 101, the checksum value of the in-vehicle device data 117 is calculated, and this value is compared to the in-vehicle device data checksum value 803. If these values are not identical to each other, it is known that the in-vehicle device data 117 is defective or, alternatively, there must be an error in the in-vehicle device data being recognized by the server 102 to be held in the in-vehicle device 101.

The analogous data checksum value 804 is a value indicating a calculation result of checksum of the analogous data 410. In the in-vehicle device 101, the checksum value of the restructured analogous data 410 is computed, and this value is compared to the analogous data checksum value 804. If these values are not identical, it is found that the analogous data 410 could not be restructured successfully.

The difference data checksum value 805 is a value indicating a calculation result of checksums of the allocation information 409 and difference data 412. In the in-vehicle device 101, checksum values of the allocation information 409 and difference data 412 are computed for comparison to the difference data checksum value 805. If these values are not identical, it is made sure that the data could not be downloaded successfully.

By adding such various kinds of checksum values to the difference data 801 in this way, it becomes possible to detect various types of data defects and processing failures. In this example, simple checksum values are used; however, other error correction coding techniques may alternatively be used. Optionally, certain codes may also be added thereto, which enable the in-vehicle device 101 to detect and correct errors, such as error correction coding (ECC).

Note here that all of these object data checksum value 802, in-vehicle device data checksum value 803, analogous data checksum value 804 and difference data checksum value 805 are not necessarily involved in the difference data 801, one or several values selected therefrom may be included in the difference data 801. The in-vehicle device data checksum value 803 may be pre-saved in the nonvolatile storage device 105 rather than in the difference data 801.

Also note that in the case of these information items capable of error detection and/or error correction being included in the distribution data, they may be arranged to be included at other locations, rather than arranged as part of the difference data.

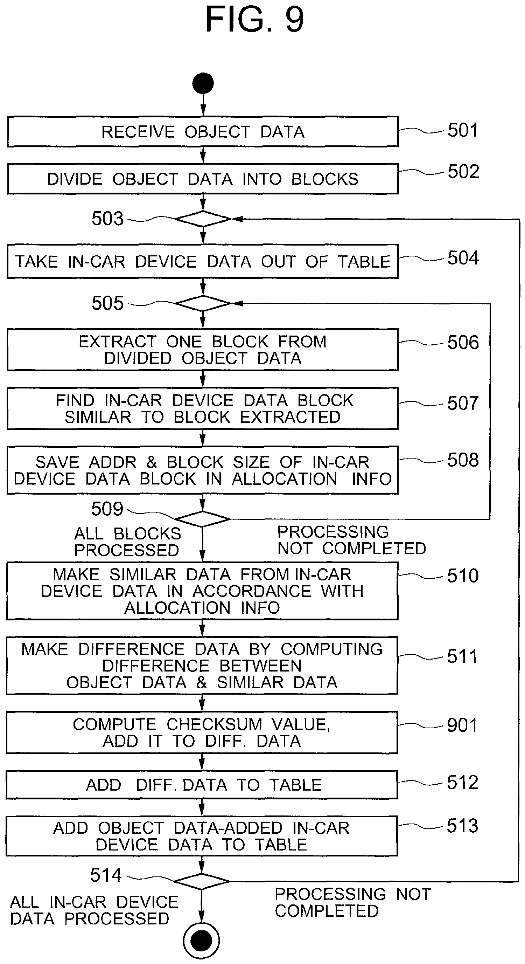

Fig. 9 is a diagram showing an exemplary procedure for permitting the distribution data generation program 119 in the server 102 of the embodiment to create the allocation information 409 and difference data 801. An explanation will be omitted of parts of the procedure of Fig. 9 which are the same in function as those of the above-stated procedure designated by the same reference numeral shown in Fig. 5.

In step 901 to be executed next to the step 511, the distribution data generation program 119 calculates the object data checksum value 802, in-vehicle device data checksum value 803, analogous data checksum value 804 and difference data checksum value 805 and then adds them to the difference data 801. As the operation of step 512 is performed after this step 901, it is possible to manage the checksum value-containing difference data using the difference data table 112, thereby making it possible to deliver the checksum-containing difference data in accordance with a request of the in-vehicle device 101.

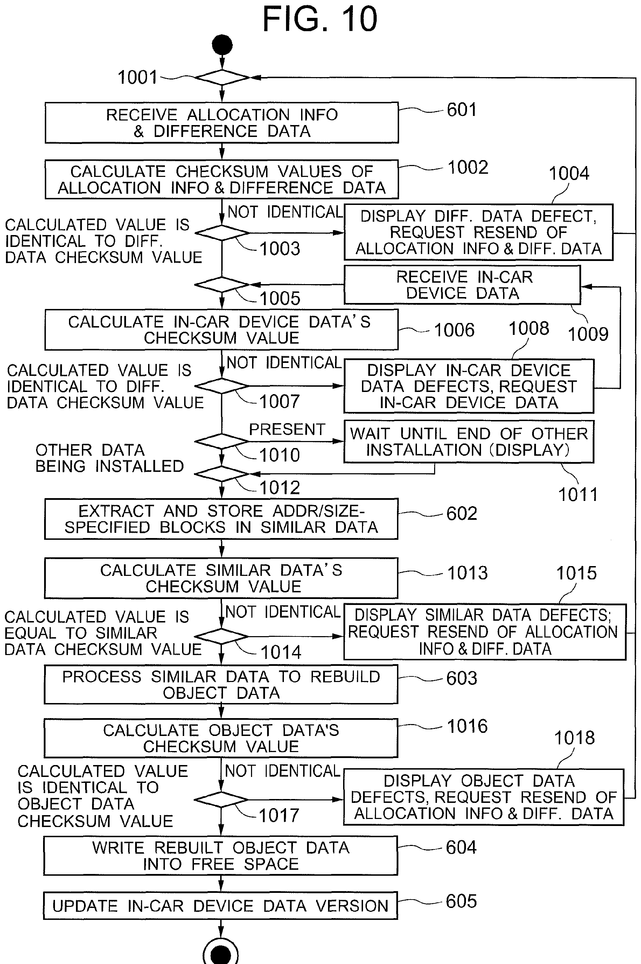

Fig. 10 is a diagram showing an exemplary procedure for causing the restructuring program 129 in the in-vehicle device 101 of the embodiment to rebuild the object data 114 based on the allocation information 409 and difference data 801. An explanation will be eliminated of some steps of the procedure of Fig. 10 which are the same in function as those of the above-stated procedure indicated by the same reference numerals shown in Fig. 6.

The restructure program 129 executes at merge 1001 the process of step 601 immediately after startup or in responding to receipt of a processing result of step 1004, step 1015 or step 1018. In step 1004, 1015 or 1018, an operation is performed to determine whether or not the downloaded allocation information 409 and difference data 801 are defective and, depending on this decision, receive again the allocation information 409 and difference data 412.

In step 1002, an operation is performed to compute checksum values of the allocation information 409 and difference data 412 received at step 601.

At branch 1003, the checksum value calculated at step 1002 is compared to the difference data checksum value 805 of the difference data 801 received at step 601. If a result of this comparison indicates that these are not identical to each other, then the procedure goes to step 1004; if they are identical then go to the merge 1005.

In step 1004, an operation is performed to display on the screen of display device 108 an error message saying that the downloaded allocation information 409 and difference data 412 are defective and send to the server 102 a request for transmitting again or "retransmitting" the allocation information 409 and difference data 412; thereafter, the procedure proceeds to the merge 1001.

At merge 1005, the operation of step 1006 is performed in response to receipt of the processing result of branch 1003 or step 1009.

In step 1006, processing is executed to compute a checksum value of the in-vehicle device data 117.

At branch 1007, the checksum value computed at step 1006 is compared to the in-vehicle device data checksum value 803 of the difference data 801 received at step 601. If the comparison result indicates that these are not identical to each other, then the procedure goes to step 1008; if they are the same then go to branch 1010.

In step 1008, an error message saying that the in-vehicle device data 117 of in-vehicle device 101 must be defective is displayed on the screen of display device 108; then, a request for resending the in-vehicle device data is transmitted to the server 102. In cases where the in-vehicle device data is large in volume, a method may also be employable for causing the display device 108 to display on its screen a message prompting the user to request an operator of the server 102 to send by mail the in-vehicle device data.

In step 1009, upon receipt of non-defective in-vehicle device data, the in-vehicle device data 117 is replaced by such defect-free data.

At branch 1010, the in-vehicle device 101 is checked for presence of any other data being in the process of installation therein. This is in order to prevent the object data 114 from losing its installability due to a change in content of the in-vehicle device data 117 as a result of installation of other data. In case there are data being in the process of installation, the procedure goes to step 1011, which waits until completion of the installation of the data being presently installed.

In step 1011, an operation is performed to display on the screen of display device 108 a message saying that there are other data being set in the installation process and that the processing of the allocation information 409 and difference data 801 received at step 601 will be restarted after completion of other installation operations, and then wait until the installation of the data being presently installed is completed.

At merge 1012, the procedure to proceeds to step 602 in response to receipt of processing results of step 1011 and branch 1010.

In step 1013, computation is performed to define a checksum value of the analogous data 410 restructured at step 602. At branch 1014, the checksum value computed at step 1013 is compared to the analogous data checksum value 804 of the difference data 801 received at step 601. If the comparison result indicates that these are not identical to each other, then the procedure goes to step 1015; if they are identical then go to step 603.

In step 1015, an operation is performed to display on the screen of display device 108 a message saying that an error occurred during the installation processing and that the error exists at the checksum value of the analogous data 410; then, a request for resending the allocation information 409 and difference data 801 is issued and sent to the server 102, followed by letting the procedure return to the merge 1001.

In step 1016, an operation is performed to calculate a checksum value of the object data 114 restructured at step 603.

At branch 1017, the checksum value calculated at step 1016 is compared to the object data checksum value 802 of the difference data 801 received at step 601. If the comparison result indicates that these are not identical, then the procedure goes to step 1018; if they are identical then go to step 604.

In step 1018, an operation is performed to display on the screen of display device 108 a message saying that an error occurred during the installation processing and that the error exists at the checksum value of the object data 114; then, a request for resending the allocation information 409 and difference data 801 is sent to the server 102, followed by letting the procedure return to the merge 1001.

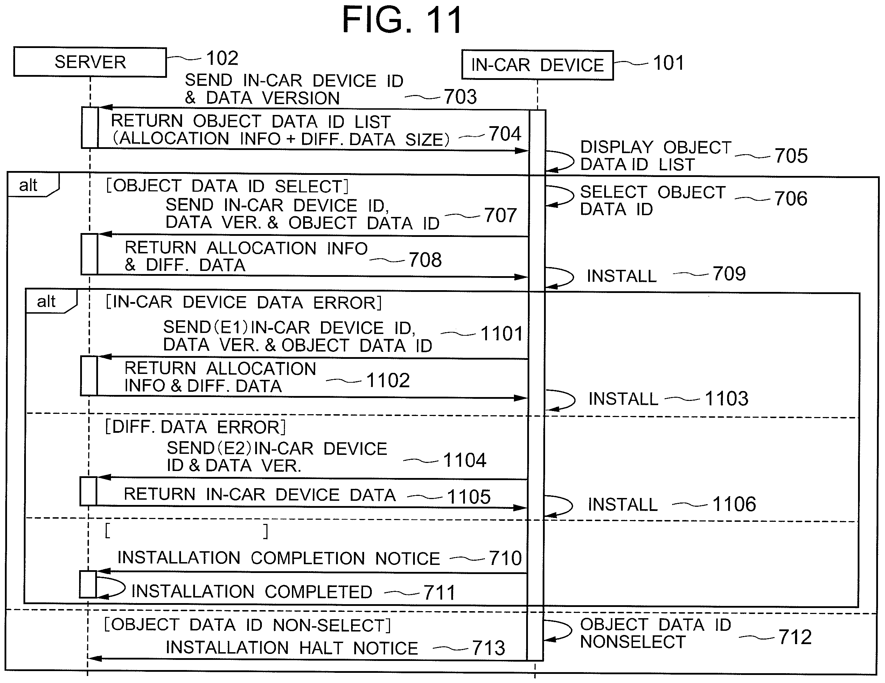

Fig. 11 is a diagram showing an exemplary sequence of the in-vehicle device 101 which downloads data from the server 102 for installation. An explanation will be eliminated of some processes of the sequence of Fig. 11 which are the same in function as those of the above-stated sequence denoted by the same reference numerals shown in Fig. 7.

A different sequence is executed in a way depending on different cases where the in-vehicle device data is determined to contain an error(s) as a result of the installation processing 709 executed by the in-vehicle device 101, where the difference data is determined to contain errors, and where the installation is determined to be completed successfully. The case where the in-vehicle device data is determined to contain errors is a case where the checksum value of the in-vehicle device data was not identical at branch 1007 of Fig. 10. The case where the difference data is determined to contain errors is a case where the checksum value was not identical at the branch 1003, 1014 or 1017 of Fig. 10. The case where the installation is judged to be completed successfully is a case where the checksum value was identical at branch 1017 of Fig. 10.

In the case where the in-vehicle device data is determined to contain errors, the in-vehicle device 101 performs transmission (E1) 1101 of in-vehicle device ID, in-vehicle device data version and object data ID toward the server 102 and then requests it to resend the allocation information 409 and difference data 801. In responding thereto, the server 102 sends (at 1102) the allocation information and difference data as distribution data to the in-vehicle device 101.

In the case of the difference data being determined to contain errors, the in-vehicle device 101 performs transmission (E2) 1104 of in-vehicle device ID and in-vehicle device data version to the server 102 and then requests it to send nondefective in-vehicle device data. This processing is equivalent to the processing at step 1008 of Fig. 10. Then, the server 102 performs in-vehicle device data return 1105 to the in-vehicle device 101. As a result, the in-vehicle device 101 is able to store therein nondefective in-vehicle device data, thereby enabling continuous execution of the installation processing.

In the case where the installation is determined to be completed successfully, it performs the processing for installation completion notice 710 and installation completion 710 in a similar way to Fig. 7.

### Embodiment 3

In this embodiment, an example of apparatus will be described, which downloads data for installation while further reducing the data amount by using compression technology in addition to the difference-based data amount reduction scheme.

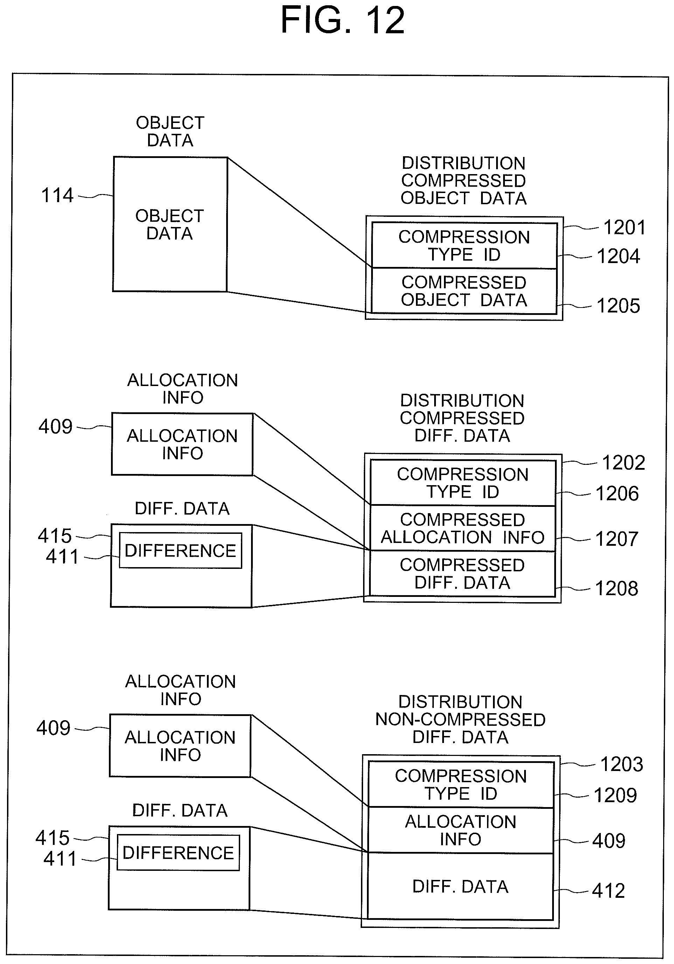

Fig. 12 is a diagram showing exemplary structures of distribution data using a compression technique in accordance with the embodiment. An explanation will be omitted of portions of the data structure which are the same in function as those of the data structure designated by the same reference numerals shown in Fig. 4.

To deliver a further reduced amount of data by using compression, there are prepared object data 1201 compressed for distribution (referred to hereinafter as distribution compressed object data), difference data 1202 compressed for distribution (referred to as distribution compressed difference data), and difference data 1203 with no compression applied thereto for distribution (referred to as distribution non-compressed difference data).

The distribution compressed object data 1201 is arranged to include a compression type ID 1204 and compressed object data 1205. The compression type ID 1204 is an ID indicating that the distribution data is the distribution compressed object data 1201. The compressed object data 1205 is a data set obtained by compressing the object data 114. The distribution data having this form is effective in cases where the in-vehicle device data 117 is less in number of portions similar to the object data 114. In this case the allocation information 409 and difference data 412 fail to sufficiently decrease in size-in some cases, distribution compressed object data 1201 obtained by compressing the object data 114 becomes smaller in volume.

The distribution compressed difference data 1202 is arranged to include a compression type ID 1206, compressed allocation information 1207 and compressed difference data 1208. The compression type ID 1206 is an ID indicating that distribution data is the distribution compressed difference data 1202. The compressed allocation information 1207 is a data set obtained by compressing the allocation information 409. The compressed difference data 1208 is obtained by compressing the difference data 412. This distribution data with this form is effective in cases where the in-vehicle data 117 is similar at many portions to the object data 114 and where data amount reduction is achievable by compression.

The distribution noncompressed difference data 1203 is arranged to include a compression type ID 1209, allocation information 409 and difference data 412. The compression type ID 1209 is an ID indicating that distribution data is the distribution noncompressed difference data 1203. This distribution data with this form is effective in cases where the in-vehicle data 117 is similar at most portions to the object data 114 and where the data amount is not reducible by compression.

By preparing the distribution data with data structures obtainable by combination of the compression and difference acquisition techniques in this way and then delivering the distribution data with the smallest form, it becomes possible to deliver a small volume of data. In addition, by having the compression type ID in the distribution data, it is possible to judge that the distribution data is which one of the distribution compressed object data 1201, distribution compressed difference data 1202 and distribution noncompressed difference data 1203, thereby enabling the in-vehicle device 101 to restructure the object data 114 from the downloaded distribution data by selecting an appropriate restoring method.

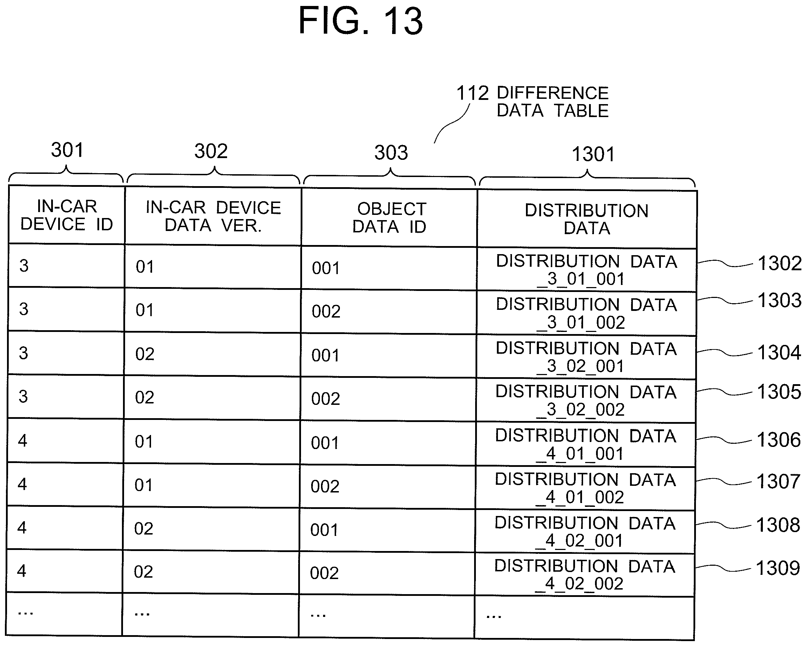

Fig. 13 shows one exemplary structure of the difference data table 112 used in the server 102 to perform management in such a way as to enable "distribution data" 1301 being delivered to the in-vehicle device 101 to be specified based on the information notified from the in-vehicle device 101. An explanation will be eliminated of some portions which are the same in function as those of the above-stated table structure denoted by the same reference numerals shown in Fig. 3.

Arow 1302 is a description as to a device having "in-car device ID" of "3" and "in-car device data version" of "01" and also having "object data ID" of "001." Arow 1303 is a description as to a device having "in-car device ID" of "3" and "in-car device data version" of "01" and also having "object data ID" of "002." Arow 1304 is a description as to a device having "in-car device ID" of "3" and "in-car device data version" of "02" and also having "object data ID" of "001." A row 1305 is a description as to a device having "in-car device ID" of "3" and "in-car device data version" of "02" and also having "object data ID" of "002." Arow 1306 is a description as to a device having "in-car device ID" of "4" and "in-car device data version" of "01" and also having "object data ID" of "001." Arow 1307 is a description as to a device having "in-car device ID" of "4" and "in-car device data version" of "01" and also having "object data ID" of "002." A row 1308 is a description as to a device having "in-car device ID" of "4" and "in-car device data version" of "02" and also having "object data ID" of "001." Arow 1309 is a description as to a device having "in-car device ID" of "4" and "in-car device data version" of "02" and also having "object data ID" of "002."

The "distribution data" 1301 is such that distribution data relative to the in-vehicle device data is recited therein. For example, "distribution data" of the one having "in-car device ID" of "3" and "in-car device data version" of "01" and also having "object data ID" of "001" is "distribution data_3_01_001"; "distribution data" of the one having "in-car device ID" of "3" and "in-car device data version" of "01" and also having "object data ID" of "002" is "distribution data_3_01_002"; "distribution data" of the one having "in-car device ID" of "3" and "in-car device data version" of "02" and also having "object data ID" of "001" is "distribution data_3_02_001"; "distribution data" of the one having "in-car device ID" of "3" and "in-car device data version" of "02" and also having "object data ID" of "002" is "distribution data_3_02_002"; "distribution data" of the one having "in-car device ID" of "4" and "in-car device data version" of "01" and also having "object data ID" of "001" is "distribution data_4_01_001"; "distribution data" of the one having "in-car device ID" of "4" and "in-car device data version" of "01" and also having "object data ID" of "002" is "distribution data_4_01_002"; "distribution data" of the one having "in-car device ID" of "4" and "in-car device data version" of "02" and also having "object data ID" of "001" is "distribution data_4_02_001"; and, "distribution data" of the one having "in-car device ID" of "4" and "in-car device data version" of "02" and also having "object data ID" of "002" is "distribution data_4_02_002."

In this way, the difference data table 112 makes it possible to specify the "distribution data" 1301 by using the "in-vehicle device ID" 301 indicative of the type of in-vehicle device, the "in-vehicle device data version" 302 that is the information for specifying data stored in the in-vehicle device and used for difference acquisition, and the "object data ID" 303 for specifying the data to be subjected to installation. Whereby, the server 102 is able to select and deliver the "distribution data" 1301 appropriate for various types of in-vehicle devices and suitable for in-vehicle devices different in situation and content of data being installed therein.

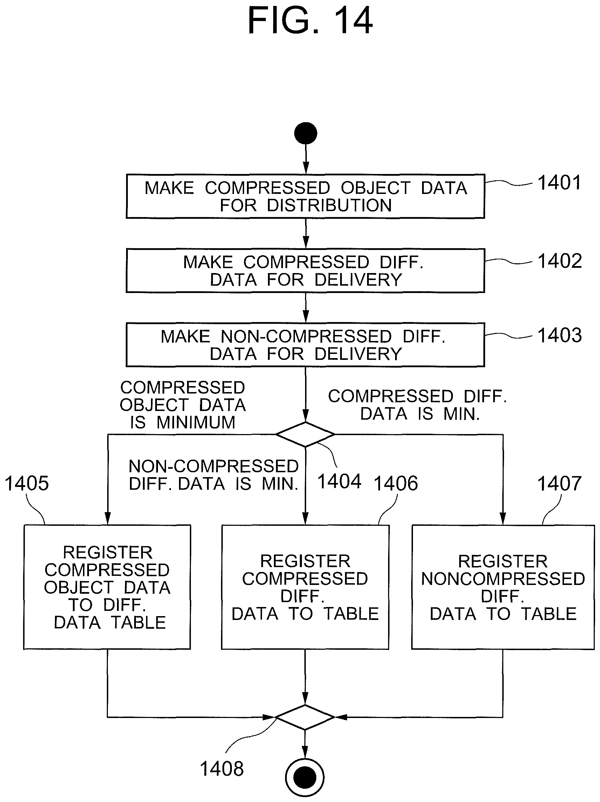

Fig. 14 is a diagram showing an exemplary procedure for causing the distribution data generation program 119 to register distribution data to the difference data table 112 in the server 102 of the embodiment.

In step 1401, the distribution data generation program 119 creates compressed object data targeted for distribution. In step 1402, an operation is performed to create compressed difference data for distribution. In step 1403, processing is executed to create compressed difference data for delivery.

At branch 1404, size comparison is applied to the distribution data sets created at steps 1401, 1402 and 1403. In a case where the distribution compressed object data created at step 1401 is the smallest in size, the procedure proceeds to step 1405. In case the distribution compressed difference data created at step 1402 is the smallest in size, the procedure goes to step 1406. In case the distribution noncompressed difference data created at step 1403 is the smallest in size, the procedure goes to step 1407.

In step 1405, processing is executed to register the distribution compressed object data created at step 1401 to the difference data table 112. In step 1406, the distribution compressed difference data created at step 1402 is registered to the difference data table 112. In step 1407, the distribution noncompressed difference data created at step 1403 is registered to the difference data table 112. At merge 1408, the registration processing is ended in response to completion of any one of the operations of steps 1405, 1406 and 1407.

By registering the distribution data to the difference data in this way, it becomes possible to deliver a further smaller volume of data to the in-vehicle device.

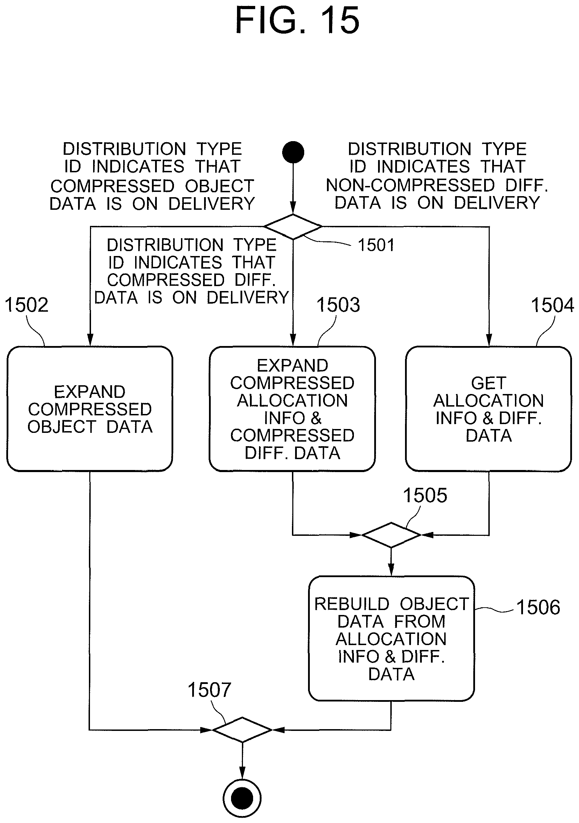

Fig. 15 is a diagram exemplifying a procedure for causing the restructure program 129 to rebuild the object data 114 from the distribution data in the in-vehicle device 101 of the embodiment.

At branch 1501, the restructure program 129 checks the compression type ID of the distribution data. In a case where the compression type ID indicates that the data of interest is the distribution compressed object data, the procedure proceeds to step 1502. In case the compression type ID indicates that it is the distribution compressed difference data, the procedure goes to step 1503. In case the compression type ID indicates that it is the distribution noncompressed difference data, the procedure goes to step 1504.

In step 1502, processing is executed to expand the compressed object data 1205 of the distribution compressed object data 1201, thereby taking the object data 114 out of it. In step 1503, processing is performed to expand the compressed allocation information 1207 and compressed difference data 1208 of the distribution compressed difference data 1202, thereby obtaining the allocation information 409 and difference data 412. In step 1504, processing is done to take allocation information 409 and difference data 412 out of the distribution noncompressed difference data 1203. At merge 1505, the procedure goes to step 1506 in response to completion of the processing of step 1503, 1504.

In step 1506, the allocation information 409 and difference data 412 which were taken out at step 1503 or 1504 are used to restructure the object data 114 in accordance with the above-stated procedure of Fig. 6. At merge 1507, the procedure is ended in response to completion of the processing of step 1506 or 1502.

As apparent from the foregoing, the in-vehicle device 101 is able to determine, by using the compression type ID, that the distribution data of interest is which one of the distribution compressed object data 1201, distribution compressed difference data 1202 and distribution noncompressed difference data 1203, thereby enabling successful restructuring of the object data 114 from the distribution data downloaded by selection of an appropriate method.

The specification and drawings are, accordingly, to be regarded in an illustrative rather than a restrictive sense. It will, however, be evident that various modifications and changes may be made thereto without departing from the scope of the invention(s) as set forth in the claims.

It should be further understood by those skilled in the art that although the foregoing description has been made on embodiments of the invention, the invention is not limited thereto and various changes and modifications may be made without departing the scope of the appended claims.

## Claims

1. An object data allocation system having a server apparatus (102) and a client device (101) coupled together via a network (103), for placing an object data file (114) held by the server apparatus (102) in the client device (101), wherein,
the object data file (114) comprises at least one data block (403, 404, 405);
the server apparatus (102) comprises a distribution data creation unit (119) and a delivery unit (120), wherein
the distribution data creation unit (119) is arranged
to specify a storage data group (117), wherein the storage data group (117) comprises at least one data block (406, 407, 408), being stored in a storage device (105) of the client device (101) which storage device (105) becomes a delivery destination of the at least one data block (403-405) in the object data file (114),
to extract from the specified storage data group at least one data block (406-408) which is similar at the byte-level to the at least one data block (403-405) in the object data file (114), wherein the at least one data block (406-408) extracted from the specified storage data group is similar at the byte-level to, but is not a previous version of, the at least one data block (403-405) in the object data file (114)
to create difference data (412, 801) indicative of a difference at the byte-level between the at least one data block (406-408) extracted from the specified storage data group and the at least one data block (403-405) in the object data file (114), and
to create allocation information (409) indicating placement within the storage device (105) of the client device (101) and being used for specifying the at least one data block (406-408) extracted from the specified storage data group;
the delivery unit (120) is arranged
to send distribution data containing therein the difference data (412, 801) and the allocation information (409) to the client device (101); and wherein
the client device (101) comprises a restructuring unit (129),
the restructuring unit (129) being arranged
to specify the at least one data block (406-408) extracted from the specified storage data group stored in the storage device (105) in accordance with the allocation information (409) contained in the distribution data received,
to create, using the allocation information, an analogous data file (410) from the at least one data block (406-408) extracted from the specified storage data group, the analogous data file (410) differing from the object data file (114) by the difference data, and
to rebuild the object data file (114) using the created analogous data file (410) and the difference data (412, 801).

2. The object data allocation system according to claim 1, wherein the distribution data creation unit (119) of the server apparatus (102) is arranged
to extract from the specified storage data group a plurality of data blocks (406-408) each being similar at the byte-level to one data block (403-405) of the object data file (114),
to couple together the extracted data blocks (406-408) to thereby create the analogous data file (410), and
to contain, in the allocation information (409), addresses and block sizes plus coupling orders of the extracted data blocks (406-408) to be coupled together for creation of the analogous data file (410), and wherein
the restructuring unit (129) of the client device (101) is arranged to specify the analogous data file (410) obtained by coupling the extracted data blocks (406-408) being stored in the storage device (105) in accordance with the allocation information (409) received.

3. The object data allocation system according to claim 1, wherein the distribution data creation unit (119) of the server apparatus (102) is arranged to manage identification information for specifying each client device (101) and version information of data being stored in each client device,
the client device (101) further comprises a receiver unit (128), wherein
the receiver unit (128) is arranged to perform transmission (703) of identification information specifying the client device (101) and version information of data stored in the client device to the server apparatus (102), and wherein
the distribution data creation unit (119) of the server apparatus (102) is arranged to specify a group of data stored in the storage device of the client device (101) based on the identification information and the version information as received from the client device (101).

4. The object data allocation system according to claim 1, wherein the delivery unit (120) of the server apparatus (102) contains, in the distribution data, error-detectable and/or error-correctable information comprising any one or ones of the object data file (114), the specified client device's storage data group, the analogous data file (410) and the difference data (412, 801).

5. The object data allocation system according to claim 1, wherein the distribution data creation unit (119) of the server apparatus (102) is arranged
to compare data sizes of a distribution compressed object data file (1201) obtained by compression of the object data file (114), distribution compressed difference data (1202) obtained by compression of the difference data (412, 801) and the allocation information (409), and distribution non-compressed difference data (1203) without compression of the difference data (412, 801) and the allocation information (409), and
to transmit as the distribution data a data with a minimal data size and a compression type identification ("ID") indicative of a compressed object, and wherein
the restructuring unit (129) of the client device (101) is arranged to select a restoring method of the distribution data by reference to the compression type ID.

6. A server apparatus (102) adapted to be used in an object data allocation system for placing an object data file (114) of the server apparatus in a client device (101), the server apparatus (102) adapted for being coupled thereto via a network (103), wherein
the object data file (114) comprises at least one data block (403, 404, 405); the server apparatus (102) comprises
a distribution data creation unit (119) and
a delivery unit (120), wherein
the distribution data creation unit (119) is arranged
to specify a storage data group (117), wherein the storage data group (117) comprises at least one data block (406, 407, 408), stored in a storage device (105) of the client device (101) which storage device (105) becomes a delivery destination of the at least one data block (403-405) in the object data file (410),
to extract from the specified storage data group at least one data block (406-408) which is similar at the byte-level to the at least one data block (403-405) in the object data file (114), wherein the at least one data block (406-408) extracted from the specified storage data group is similar at the byte-level to, but is not a previous version of, the at least one data block (403-405) in the object data file (114)
to create difference data (412, 801) indicative of a difference at the byte-level between the at least one data block (406-408) extracted from the specified storage data group and the at least one data block (403-405) in the object data file (114), and
to create allocation information (409) indicating placement within the storage device (105) of the client device (101) and being for specifying the at least one data block (406-408) extracted from the specified storage data group (410), and wherein
the delivery unit (120) is arranged
to transmit to the client device (101) distribution data including the difference data (412, 801) and the allocation information (409).

7. A client device (101) adapted to be used in an object data allocation system for placing an object data file (114) of a server apparatus (102) in the client device (101), the client device (101) adapted for being coupled thereto via a network (103), wherein
the object data file (114) comprises at least one data block (403, 404, 405);
the client device (101) comprises a restructuring unit (129), and wherein
the restructuring unit (129) is arranged
to receive from the server apparatus (102) distribution data, the distribution data including
difference data (412, 801) indicating a difference at a byte-level between at least one data block (406-408) extracted from a specified storage data group, stored in a storage device (105) of the client device (101) and the at least one data block (403-405) in the object data file (114), wherein the at least one data block (406-408) extracted from the specified storage data group is similar at the byte-level to, but is not a previous version of, the at least one data block (403-405) in the object data file (114), and
allocation information (409) indicative of placement within the storage device (105) of the client device (101),
to specify the at least one data block (406-408) extracted from the specified storage data group stored in the storage device (105) in accordance with the allocation information (409) contained in the received distribution data,
to create, using the allocation information, an analogous data file (410) from the at least one data block (406-408) extracted from the specified storage data group, the analogous data file (410) differing from the object data file (114) by the difference data (412, 801), and
to rebuild the object data file (114) using the created analogous data file (410) and the received difference data (412, 801).

8. A method of object data allocation in a system having a server apparatus (102) and a client device (101) coupled together via a network (103), for placing an object data file (114) held by the server apparatus (102) in the client device (101), wherein
the object data file (114) comprises at least one data block (403, 404, 405); and
wherein the method includes the steps of the server apparatus (102)
specifying a storage data group (117), wherein the storage data group (117) comprises at least one data block (406, 407, 408), being stored in a storage device (105) of the client device (101) which storage device (105) becomes a delivery destination of the at least one data block (403-405) in the object data file (114),
extracting from the specified storage data group at least one data block (406-408) which is similar at the byte level to the at least one data block (403-405) in the object data file (114), wherein the at least one data block (406-408) extracted from the specified storage data group is similar at the byte-level to, but is not a previous version of, the at least one data block (403-405) in the object data file (114),
creating difference data (412, 801) indicative of a difference at the byte-level between the at least one data block (406-408) extracted from the specified storage data group and the at least one data block (403-405) in the object data file (114),
creating allocation information (409) indicating placement within the storage device (105) of the client device (101) and being used for specifying the at least one data block (406-408) extracted from the specified storage data group,
sending distribution data containing therein the difference data (412, 801) and the allocation information (409) to the client device (101), and wherein
the client device (101)
specifies the at least one data block (406-408) extracted from the specified storage data group stored in the storage device (105) in accordance with the allocation information (409) contained in the distribution data received,
creates, using the allocation information, an analogous data file (410) from the at least one data block (406-408) extracted from the specified storage data group, the analogous data file (410) differing from the object data file (114) by the difference data, and
rebuilds the object data file (114) using the created analogous data file (410) and the difference data (412, 801).

9. The method according to claim 8, wherein the method further includes the steps of
the server apparatus (102)
extracting from the specified storage data group a plurality of data blocks (406-408) each being similar at the byte-level to one data block (403-405) of the object data file (114),
coupling together the extracted data blocks (406-408) to thereby create the analogous data file (410), and
containing, in the allocation information (409), addresses and block sizes plus coupling orders of the extracted data blocks (406-408) to be coupled together for creation of the analogous data file (410), wherein
the client device (101) specifies the analogous data file (410) obtained by coupling the extracted data blocks (406-408) being stored in the storage device (105) in accordance with the allocation information (409) received.

10. The method according to claim 8, wherein the method further includes the steps of
the server apparatus (102)
managing identification information for specifying each client device (101) and version information of data being stored in each client device, and
the client device (101)
performing transmission (703) of identification information specifying the client device (101) and version information of data stored in the client device to the server apparatus (102), wherein
the server apparatus (102) specifies a group of data stored in the storage device of the client device (101) based on the identification information and the version information as received from the client device (101).

## Patentansprüche

1. Objektdatenzuweisungssystem, das eine Servervorrichtung (102) und eine Clientvorrichtung (101) aufweist, die über ein Netzwerk (103) miteinander gekoppelt sind, zum Platzieren einer Objektdatendatei (114), die von der Servervorrichtung (102) gespeichert wird, in der Clientvorrichtung (101), wobei
die Objektdatendatei (114) zumindest einen Datenblock (403, 404, 405) umfasst;
die Servervorrichtung (102) eine Verteilungsdatenerstellungseinheit (119) und eine Übermittlungseinheit (120) umfasst, wobei
die Verteilungsdatenerstellungseinheit (119) angeordnet ist
zum Spezifizieren einer Speicherdatengruppe (117), wobei die Speicherdatengruppe (117) zumindest einen Datenblock (406, 407, 408) umfasst und in einer Speichervorrichtung (105) der Clientvorrichtung (101) gespeichert ist, wobei die Speichervorrichtung (105) zu einem Übermittlungsziel des zumindest einen Datenblocks (403-405) in der Objektdatendatei (114) wird,
zum Extrahieren zumindest eines Datenblocks (406-408), der auf Byte-Ebene ähnlich dem zumindest einen Datenblock (403-405) in der Objektdatendatei (114) ist, aus der spezifizierten Speicherdatengruppe, wobei der zumindest eine aus der spezifizierten Speicherdatengruppe extrahierte Datenblock (406-408) auf Byte-Ebene ähnlich dem zumindest einen Datenblock (403-405) in der Objektdatendatei (114) ist, aber keine frühere Version davon ist;
zum Erstellen von Differenzdaten (412, 801), die eine Differenz auf Byte-Ebene zwischen dem zumindest einen aus der spezifizierten Speicherdatengruppe extrahierten Datenblock (406-408) und dem zumindest einen Datenblock (403-405) in der Objektdatendatei (114) angeben, und
zum Erstellen von Zuweisungsinformationen (409), die eine Platzierung in der Speichervorrichtung (105) der Clientvorrichtung (101) angeben und zum Spezifizieren des zumindest einen aus der spezifizierten Speicherdatengruppe extrahierten Datenblocks (406-408) verwendet werden;
wobei die Übermittlungseinheit (120) angeordnet ist
zum Senden von Verteilungsdaten, die darin die Differenzdaten (412, 801) und die Zuweisungsinformationen (409) enthalten, an die Clientvorrichtung (101); und wobei
die Clientvorrichtung (101) eine Umstrukturierungseinheit (129) umfasst,
wobei die Umstrukturierungseinheit (129) angeordnet ist
zum Spezifizieren des zumindest einen Datenblocks (406-408), der aus der spezifizierten Speicherdatengruppe extrahiert wird, die in der Speichervorrichtung (105) gespeichert ist, gemäß den in den empfangenen Verteilungsdaten enthaltenen Zuweisungsinformationen (409),
zum Erstellen einer analogen Datendatei (410) aus dem zumindest einen aus der spezifizierten Speicherdatengruppe extrahierten Datenblock (406-408) unter Verwendung der Zuweisungsinformationen, wobei sich die analoge Datendatei (410) von der Objektdatendatei (114) durch die Differenzdaten unterscheidet, und
zum Neu-Erstellen der Objektdatendatei (114) unter Verwendung der erstellten analogen Datendatei (410) und der Differenzdaten (412, 801).

2. Objektdatenzuweisungssystem nach Anspruch 1, wobei die Verteilungsdatenerstellungseinheit (119) der Servervorrichtung (102) angeordnet ist
zum Extrahieren einer Vielzahl von Datenblöcken (406-408) aus der spezifizierten Speicherdatengruppe, wobei jeder davon auf Byte-Ebene einem Datenblock (403-405) der Objektdatendatei (114) ähnlich ist,
zum Miteinanderkoppeln der extrahierten Datenblöcke (406-408), um dadurch die analoge Datendatei (410) zu erstellen, und
zum Enthalten, in den Zuweisungsinformationen (409), von Adressen und Blockgrößen sowie Kopplungsreihenfolgen der extrahierten Datenblöcke (406-408), die zur Erstellung der analogen Datendatei (410) miteinander gekoppelt werden, und wobei
die Umstrukturierungseinheit (129) der Clientvorrichtung (101) angeordnet ist zum Spezifizieren der analogen Datendatei (410), die durch Koppeln der in der Speichervorrichtung (105) gespeicherten extrahierten Datenblöcke (406-408) erhalten wird, gemäß den empfangenen Zuweisungsinformationen (409).

3. Objektdatenzuweisungssystem nach Anspruch 1, wobei
die Verteilungsdatenerstellungseinheit (119) der Servervorrichtung (102) angeordnet ist zum Verwalten von Identifikationsinformationen zum Spezifizieren jeder Clientvorrichtung (101) und Versionsinformationen von Daten, die in jeder Clientvorrichtung gespeichert sind,
die Clientvorrichtung (101) ferner eine Empfängereinheit (128) umfasst, wobei
die Empfängereinheit (128) angeordnet ist zum Durchführen der Übertragung (703) von Identifikationsinformationen, die die Clientvorrichtung (101) spezifizieren, und Versionsinformationen von Daten, die in der Clientvorrichtung gespeichert sind, an die Servervorrichtung (102), und wobei
die Verteilungsdatenerstellungseinheit (119) der Servervorrichtung (102) angeordnet ist zum Spezifizieren einer Gruppe von Daten, die in der Speichervorrichtung der Clientvorrichtung (101) gespeichert ist, basierend auf den Identifikationsinformationen und den Versionsinformationen, die von der Clientvorrichtung (101) empfangen werden.

4. Objektdatenzuweisungssystem nach Anspruch 1, wobei die Übermittlungseinheit (120) der Servervorrichtung (102) in den Verteilungsdaten fehlerdetektierbare und/oder fehlerkorrigierbare Informationen enthält, die ein beliebiges oder beliebige der Objektdatendatei (114), der spezifizierten Speicherdatengruppe der Clientvorrichtung, der analogen Datendatei (410) und der Differenzdaten (412, 801) umfassen.

5. Objektdatenzuweisungssystem nach Anspruch 1, wobei die Verteilungsdatenerstellungseinheit (119) der Servervorrichtung (102) angeordnet ist
zum Vergleichen von Datengrößen einer komprimierten Verteilungs-Objektdatendatei (1201), die durch Komprimieren der Objektdatendatei (114) erhalten wird, von komprimierten Verteilungs-Differenzdaten (1202), die durch Komprimieren der Differenzdaten (412, 801) und der Zuweisungsinformationen (409) erhalten werden, und von nicht komprimierten Verteilungs-Differenzdaten (1203) ohne Komprimieren der Differenzdaten (412, 801) und der Zuweisungsinformationen (409) und
zum Übertragen, als die Verteilungsdaten, von Daten mit minimaler Datengröße und einer Kompressionstyp-Kennzeichnung ("ID"), die ein komprimiertes Objekt angibt, und wobei
die Umstrukturierungseinheit (129) der Clientvorrichtung (101) angeordnet ist zum Auswählen eines Wiederherstellungsverfahrens der Verteilungsdaten anhand der Kompressionstyp-ID.

6. Servervorrichtung (102), die dafür eingerichtet ist, in einem Objektdatenzuweisungssystem zum Platzieren einer Objektdatendatei (114) der Servervorrichtung in einer Clientvorrichtung (101) verwendet zu werden, wobei die Servervorrichtung (102) dafür eingerichtet ist, über ein Netzwerk (103) damit gekoppelt zu werden, wobei
die Objektdatendatei (114) zumindest einen Datenblock (403, 404, 405) umfasst;
die Servervorrichtung (102)
eine Verteilungsdatenerstellungseinheit (119) und
eine Übermittlungseinheit (120) umfasst, wobei
die Verteilungsdatenerstellungseinheit (119) angeordnet ist
zum Spezifizieren einer Speicherdatengruppe (117), wobei die Speicherdatengruppe (117) zumindest einen Datenblock (406, 407, 408) umfasst und in einer Speichervorrichtung (105) der Clientvorrichtung (101) gespeichert ist, wobei die Speichervorrichtung (105) zu einem Übermittlungsziel des zumindest einen Datenblocks (403-405) in der Objektdatendatei (114) wird,
zum Extrahieren zumindest eines Datenblocks (406-408), der auf Byte-Ebene ähnlich dem zumindest einen Datenblock (403-405) in der Objektdatendatei (114) ist, aus der spezifizierten Speicherdatengruppe, wobei der zumindest eine aus der spezifizierten Speicherdatengruppe extrahierte Datenblock (406-408) auf Byte-Ebene ähnlich dem zumindest einen Datenblock (403-405) in der Objektdatendatei (114) ist, aber keine frühere Version davon ist,
zum Erstellen von Differenzdaten (412, 801), die eine Differenz auf Byte-Ebene zwischen dem zumindest einen aus der spezifizierten Speicherdatengruppe extrahierten Datenblock (406-408) und dem zumindest einen Datenblock (403-405) in der Objektdatendatei (114) angeben, und
zum Erstellen von Zuweisungsinformationen (409), die eine Platzierung in der Speichervorrichtung (105) der Clientvorrichtung (101) angeben und zum Spezifizieren des zumindest einen aus der spezifizierten Speicherdatengruppe (410) extrahierten Datenblocks (406-408) verwendet werden, und wobei
die Übermittlungseinheit (120) angeordnet ist
zum Übertragen von Verteilungsdaten, einschließlich der Differenzdaten (412, 801) und der Zuweisungsinformationen (409), an die Clientvorrichtung (101).

7. Clientvorrichtung (101), die dafür eingerichtet ist, in einem Objektdatenzuweisungssystem zum Platzieren einer Objektdatendatei (114) einer Servervorrichtung (102) in der Clientvorrichtung (101) verwendet zu werden, wobei die Clientvorrichtung (101) dafür eingerichtet ist, über ein Netzwerk (103) damit gekoppelt zu werden, wobei
die Objektdatendatei (114) zumindest einen Datenblock (403, 404, 405) umfasst;
die Clientvorrichtung (101) eine Umstrukturierungseinheit (129) umfasst und wobei
die Umstrukturierungseinheit (129) angeordnet ist
zum Empfangen von Verteilungsdaten von der Servervorrichtung (102), wobei die Verteilungsdaten
Differenzdaten (412, 801), die eine Differenz auf Byte-Ebene zwischen zumindest einem aus einer spezifizierten Speicherdatengruppe, welche in einer Speichervorrichtung (105) der Clientvorrichtung (101) gespeichert ist, extrahierten Datenblock (406-408) und dem zumindest einen Datenblock (403-405) in der Objektdatendatei (114) angeben, wobei der zumindest eine aus der spezifizierten Speicherdatengruppe extrahierte Datenblock (406-408) auf Byte-Ebene ähnlich dem zumindest einen Datenblock (403-405) in der Objektdatendatei (114) ist, aber keine frühere Version davon ist, und
Zuweisungsinformationen (409), die eine Platzierung in der Speichervorrichtung (105) der Clientvorrichtung (101) angeben, umfassen,
zum Spezifizieren des zumindest einen Datenblocks (406-408), der aus der spezifizierten Speicherdatengruppe extrahiert wird, die in der Speichervorrichtung (105) gespeichert ist, gemäß den in den empfangenen Verteilungsdaten enthaltenen Zuweisungsinformationen (409),
zum Erstellen einer analogen Datendatei (410) aus dem zumindest einen aus der spezifizierten Speicherdatengruppe extrahierten Datenblock (406-408) unter Verwendung der Zuweisungsinformationen, wobei sich die analoge Datendatei (410) von der Objektdatendatei (114) durch die Differenzdaten (412, 801) unterscheidet, und
zum Neu-Erstellen der Objektdatendatei (114) unter Verwendung der erstellten analogen Datendatei (410) und der empfangenen Differenzdaten (412, 801).

8. Verfahren zur Objektdatenzuweisung in einem System, das eine Servervorrichtung (102) und eine Clientvorrichtung (101) aufweist, die über ein Netzwerk (103) miteinander gekoppelt sind, zum Platzieren einer Objektdatendatei (114), die von der Servervorrichtung (102) gespeichert wird, in der Clientvorrichtung (101), wobei
die Objektdatendatei (114) zumindest einen Datenblock (403, 404, 405) umfasst; und
das Verfahren folgende von der Servervorrichtung (102) durchgeführte Schritte umfasst:
Spezifizieren einer Speicherdatengruppe (117), wobei die Speicherdatengruppe (117) zumindest einen Datenblock (406, 407, 408) umfasst und in einer Speichervorrichtung (105) der Clientvorrichtung (101) gespeichert ist, wobei die Speichervorrichtung (105) zu einem Übermittlungsziel des zumindest einen Datenblocks (403-405) in der Objektdatendatei (114) wird,
Extrahieren zumindest eines Datenblocks (406-408), der auf Byte-Ebene ähnlich dem zumindest einen Datenblock (403-405) in der Objektdatendatei (114) ist, aus der spezifizierten Speicherdatengruppe, wobei der zumindest eine aus der spezifizierten Speicherdatengruppe extrahierte Datenblock (406-408) auf Byte-Ebene ähnlich dem zumindest einen Datenblock (403-405) in der Objektdatendatei (114) ist, aber keine frühere Version davon ist;
Erstellen von Differenzdaten (412, 801), die eine Differenz auf Byte-Ebene zwischen dem zumindest einen aus der spezifizierten Speicherdatengruppe extrahierten Datenblock (406-408) und dem zumindest einen Datenblock (403-405) in der Objektdatendatei (114) angeben,
Erstellen von Zuweisungsinformationen (409), die eine Platzierung in der Speichervorrichtung (105) der Clientvorrichtung (101) angeben und zum Spezifizieren des zumindest einen aus der spezifizierten Speicherdatengruppe extrahierten Datenblocks (406-408) verwendet werden;
Senden von Verteilungsdaten, die darin die Differenzdaten (412, 801) und die Zuweisungsinformationen (409) enthalten, an die Clientvorrichtung (101), und wobei
die Clientvorrichtung (101)
den zumindest einen Datenblock (406-408), der aus der spezifizierten Speicherdatengruppe extrahiert wird, die in der Speichervorrichtung (105) gespeichert ist, gemäß den in den empfangenen Verteilungsdaten enthaltenen Zuweisungsinformationen (409) spezifiziert,
unter Verwendung der Zuweisungsinformationen eine analoge Datendatei (410) aus dem zumindest einen aus der spezifizierten Speicherdatengruppe extrahierten Datenblock (406-408) erstellt, wobei sich die analoge Datendatei (410) von der Objektdatendatei (114) durch die Differenzdaten unterscheidet, und
die Objektdatendatei (114) unter Verwendung der erstellten analogen Datendatei (410) und der Differenzdaten (412, 801) neu erstellt.

9. Verfahren nach Anspruch 8, wobei das Verfahren ferner folgende von der Servervorrichtung (102) durchgeführte Schritte umfasst:
Extrahieren einer Vielzahl von Datenblöcken (406-408) aus der spezifizierten Speicherdatengruppe, wobei jeder davon auf Byte-Ebene einem Datenblock (403-405) der Objektdatendatei (114) ähnlich ist,
Miteinanderkoppeln der extrahierten Datenblöcke (406-408), um dadurch die analoge Datendatei (410) zu erstellen, und
Enthalten, in den Zuweisungsinformationen (409), von Adressen und Blockgrößen sowie Kopplungsreihenfolgen der extrahierten Datenblöcke (406-408), die zur Erstellung der analogen Datendatei (410) miteinander gekoppelt werden, wobei
die Clientvorrichtung (101) die analoge Datendatei (410), die durch Koppeln der in der Speichervorrichtung (105) gespeicherten extrahierten Datenblöcke (406-408) erhalten wird, gemäß den empfangenen Zuweisungsinformationen (409) spezifiziert.

10. Verfahren nach Anspruch 8, wobei das Verfahren ferner folgende Schritte umfasst, in denen
die Servervorrichtung (102)
Identifikationsinformationen zum Spezifizieren jeder Clientvorrichtung (101) und Versionsinformationen von Daten, die in jeder Clientvorrichtung gespeichert sind, verwaltet und
die Clientvorrichtung (101)
Übertragung (703) von Identifikationsinformationen, die die Clientvorrichtung (101) spezifizieren, und Versionsinformationen von Daten, die in der Clientvorrichtung gespeichert sind, an die Servervorrichtung (102) durchführt, wobei
die Servervorrichtung (102) eine Gruppe von Daten, die in der Speichervorrichtung der Clientvorrichtung (101) gespeichert ist, basierend auf den Identifikationsinformationen und den Versionsinformationen, die von der Clientvorrichtung (101) empfangen werden, spezifiziert.

## Revendications

1. Système d'allocation de données d'objet présentant un appareil serveur (102) et un dispositif client (101) couplés ensemble par l'intermédiaire d'un réseau (103), pour placer un fichier de données d'objet (114) conservé par l'appareil serveur (102) dans le dispositif client (101), dans lequel :
le fichier de données d'objet (114) comprend au moins un bloc de données (403, 404, 405) ;
l'appareil serveur (102) comprend une unité de création de données de distribution (119) et une unité de remise (120), dans lequel :
l'unité de création de données de distribution (119) est agencée de manière à :
spécifier un groupe de données de stockage (117), dans lequel le groupe de données de stockage (117) comprend au moins un bloc de données (406, 407, 408), lequel est stocké dans un dispositif de stockage (105) du dispositif client (101), lequel dispositif de stockage (105) devient une destination de remise dudit au moins un bloc de données (403-405) dans le fichier de données d'objet (114),
extraire, du groupe de données de stockage spécifié, au moins un bloc de données (406-408) qui est similaire, au niveau des octets, audit au moins un bloc de données (403-405) dans le fichier de données d'objet (114), dans lequel ledit au moins un bloc de données (406-408) extrait du groupe de données de stockage spécifié est similaire, au niveau des octets, audit au moins un bloc de données (403-405) dans le fichier de données d'objet (114), mais n'est pas une version précédente dudit au moins un bloc de données dans le fichier de données d'objet ;
créer des données de différence (412, 801) indicatives d'une différence, au niveau des octets, entre ledit au moins un bloc de données (406-408) extrait du groupe de données de stockage spécifié et ledit au moins un bloc de données (403-405) dans le fichier de données d'objet (114) ; et
créer des informations d'allocation (409) indiquant un placement dans le dispositif de stockage (105) du dispositif client (101) et qui sont utilisées en vue de spécifier ledit au moins un bloc de données (406-408) extrait du groupe de données de stockage spécifié ;
l'unité de remise (120) est agencée de manière à :
envoyer des données de distribution contenant les données de différence (412, 801) et les informations d'allocation (409) au dispositif client (101) ; et dans lequel
le dispositif client (101) comprend une unité de restructuration (129) ;
l'unité de restructuration (129) étant agencée de manière à :
spécifier ledit au moins un bloc de données (406-408) extrait du groupe de données de stockage spécifié, stocké dans le dispositif de stockage (105), conformément aux informations d'allocation (409) contenues dans les données de distribution reçues ;
créer, en utilisant les informations d'allocation, un fichier de données analogues (410), à partir dudit au moins un bloc de données (406-408) extrait du groupe de données de stockage spécifié, le fichier de données analogues (410) se distinguant du fichier de données d'objet (114) par les données de différence ; et
reconstruire le fichier de données d'objet (114) en utilisant le fichier de données analogues créé (410) et les données de différence (412, 801).

2. Système d'allocation de données d'objet selon la revendication 1, dans lequel l'unité de création de données de distribution (119) de l'appareil serveur (102) est agencée de manière à :
extraire, du groupe de données de stockage spécifié, une pluralité de blocs de données (406-408) dont chacun est similaire, au niveau des octets, à un bloc de données (403-405) du fichier de données d'objet (114) ;
coupler ensemble les blocs de données extraits (406-408) en vue de créer par conséquent le fichier de données analogues (410) ; et
contenir, dans les informations d'allocation (409), des adresses et des tailles de blocs, ainsi que des ordres de couplage des blocs de données extraits (406-408) devant être couplés ensemble pour la création du fichier de données analogues (410), et dans lequel
l'unité de restructuration (129) du dispositif client (101) est agencée de manière à spécifier le fichier de données analogues (410) obtenu en couplant les blocs de données extraits (406-408) stockés dans le dispositif de stockage (105) conformément aux informations d'allocation (409) reçues.

3. Système d'allocation de données d'objet selon la revendication 1, dans lequel l'unité de création de données de distribution (119) de l'appareil serveur (102) est agencée de manière à gérer des informations d'identification pour spécifier chaque dispositif client (101) et des informations de version de données qui sont stockées dans chaque dispositif client ;
le dispositif client (101) comprend en outre une unité de réception (128), dans lequel
l'unité de réception (128) est agencée de manière à mettre en œuvre une transmission (703) d'informations d'identification spécifiant le dispositif client (101) et d'informations de version de données stockées dans le dispositif client, à l'appareil serveur (102), et dans lequel :
l'unité de création de données de distribution (119) de l'appareil serveur (102) est agencée de manière à spécifier un groupe de données stocké dans le dispositif de stockage du dispositif client (101) sur la base des informations d'identification et des informations de version telles que reçues en provenance du dispositif client (101).

4. Système d'allocation de données d'objet selon la revendication 1, dans lequel l'unité de remise (120) de l'appareil serveur (102) contient, dans les données de distribution, des informations à détection d'erreur et/ou à correction d'erreur comprenant l'un quelconque ou plusieurs des éléments parmi : le fichier de données d'objet (114), le groupe de données de stockage du dispositif client spécifié, le fichier de données analogues (410) et les données de différence (412, 801).

5. Système d'allocation de données d'objet selon la revendication 1, dans lequel l'unité de création de données de distribution (119) de l'appareil serveur (102) est agencée de manière à :
comparer des tailles de données d'un fichier de données d'objet compressé de distribution (1201) obtenu par compression du fichier de données d'objet (114), de données de différence compressées de distribution (1202) obtenues par compression des données de différence (412, 801) et des informations d'allocation (409), et de données de différence non compressées de distribution (1203) sans compression des données de différence (412, 801) et des informations d'allocation (409) ; et
transmettre, en tant que les données de distribution, des données présentant une taille de données minimale et une identification de type de compression (« ID ») indicative d'un objet compressé, et dans lequel
l'unité de restructuration (129) du dispositif client (101) est agencée de manière à sélectionner un procédé de restauration des données de distribution en référence à l'identification, ID, de type de compression.

6. Appareil serveur (102) apte à être utilisé dans un système d'allocation de données d'objet pour placer un fichier de données d'objet (114) de l'appareil serveur dans un dispositif client (101), l'appareil serveur (102) étant apte à être couplé à celui-ci par l'intermédiaire d'un réseau (103), dans lequel :
le fichier de données d'objet (114) comprend au moins un bloc de données (403, 404, 405) ;
l'appareil serveur (102) comprend :
une unité de création de données de distribution (119) ; et
une unité de remise (120), dans laquelle
l'unité de création de données de distribution (119) est agencée de manière à :
spécifier un groupe de données de stockage (117), dans lequel le groupe de données de stockage (117) comprend au moins un bloc de données (406, 407, 408), stocké dans un dispositif de stockage (105) du dispositif client (101), lequel dispositif de stockage (105) devient une destination de remise dudit au moins un bloc de données (403-405) dans le fichier de données d'objet (410) ;
extraire, du groupe de données de stockage spécifié, au moins un bloc de données (406-408) qui est similaire, au niveau des octets, audit au moins un bloc de données (403-405) dans le fichier de données d'objet (114), dans lequel ledit au moins un bloc de données (406-408) extrait du groupe de données de stockage spécifié est similaire, au niveau des octets, audit au moins un bloc de données (403-405) dans le fichier de données d'objet (114), mais n'est pas une version précédente dudit au moins un bloc de données dans le fichier de données d'objet ;
créer des données de différence (412, 801) indicatives d'une différence, au niveau des octets, entre ledit au moins un bloc de données (406-408) extrait du groupe de données de stockage spécifié et ledit au moins un bloc de données (403-405) dans le fichier de données d'objet (114) ; et
créer des informations d'allocation (409) indiquant un placement dans le dispositif de stockage (105) du dispositif client (101) et qui sont destinées à spécifier ledit au moins un bloc de données (406-408) extrait du groupe de données de stockage spécifié (410), et dans lequel
l'unité de remise (120) est agencée de manière à :
transmettre, au dispositif client (101), des données de distribution incluant les données de différence (412, 801) et les informations d'allocation (409).

7. Dispositif client (101) apte à être utilisé dans un système d'allocation de données d'objet pour placer un fichier de données d'objet (114) d'un appareil serveur (102) dans le dispositif client (101), le dispositif client (101) étant apte à être couplé à celui-ci par l'intermédiaire d'un réseau (103), dans lequel :
le fichier de données d'objet (114) comprend au moins un bloc de données (403, 404, 405) ;
le dispositif client (101) comprend une unité de restructuration (129), et dans lequel l'unité de restructuration (129) est agencée de manière à :
recevoir, en provenance de l'appareil serveur (102), des données de distribution, les données de distribution incluant :
des données de différence (412, 801) indicatives d'une différence, au niveau des octets, entre au moins un bloc de données (406-408) extrait d'un groupe de données de stockage spécifié, stocké dans un dispositif de stockage (105) du dispositif client (101), et ledit au moins un bloc de données (403-405) dans le fichier de données d'objet (114), dans lequel ledit au moins un bloc de données (406-408) extrait du groupe de données de stockage spécifié est similaire, au niveau des octets, audit au moins un bloc de données (403-405) dans le fichier de données d'objet (114), mais n'est pas une version précédente dudit au moins un bloc de données dans le fichier de données d'objet ; et
des informations d'allocation (409) indicatives d'un placement dans le dispositif de stockage (105) du dispositif client (101) ;
spécifier ledit au moins un bloc de données (406-408) extrait du groupe de données de stockage spécifié, stocké dans le dispositif de stockage (105), conformément aux informations d'allocation (409) contenues dans les données de distribution reçues ;
créer, en utilisant les informations d'allocation, un fichier de données analogues (410), à partir dudit au moins un bloc de données (406-408) extrait du groupe de données de stockage spécifié, le fichier de données analogues (410) se distinguant du fichier de données d'objet (114) par les données de différence (412, 801) ; et
reconstruire le fichier de données d'objet (114) en utilisant le fichier de données analogues créé (410) et les données de différence reçues (412, 801).

8. Procédé d'allocation de données d'objet dans un système présentant un appareil serveur (102) et un dispositif client (101) couplés ensemble par l'intermédiaire d'un réseau (103), pour placer un fichier de données d'objet (114) conservé par l'appareil serveur (102) dans le dispositif client (101), dans lequel :
le fichier de données d'objet (114) comprend au moins un bloc de données (403, 404, 405) ; et
dans lequel le procédé inclut les étapes mises en œuvre par l'appareil serveur (102), consistant à :
spécifier un groupe de données de stockage (117), dans lequel le groupe de données de stockage (117) comprend au moins un bloc de données (406, 407, 408), lequel est stocké dans un dispositif de stockage (105) du dispositif client (101), lequel dispositif de stockage (105) devient une destination de remise dudit au moins un bloc de données (403-405) dans le fichier de données d'objet (114) ;
extraire, du groupe de données de stockage spécifié, au moins un bloc de données (406-408) qui est similaire, au niveau des octets, audit au moins un bloc de données (403-405) dans le fichier de données d'objet (114), dans lequel ledit au moins un bloc de données (406-408) extrait du groupe de données de stockage spécifié est similaire, au niveau des octets, audit au moins un bloc de données (403-405) dans le fichier de données d'objet (114), mais n'est pas une version précédente dudit au moins un bloc de données dans le fichier de données d'objet ;
créer des données de différence (412, 801) indicatives d'une différence, au niveau des octets, entre ledit au moins un bloc de données (406-408) extrait du groupe de données de stockage spécifié et ledit au moins un bloc de données (403-405) dans le fichier de données d'objet (114) ;
créer des informations d'allocation (409) indiquant un placement dans le dispositif de stockage (105) du dispositif client (101) et qui sont utilisées en vue de spécifier ledit au moins un bloc de données (406-408) extrait du groupe de données de stockage spécifié ;
envoyer des données de distribution contenant les données de différence (412, 801) et les informations d'allocation (409), au dispositif client (101), et dans lequel
le dispositif client (101) :
spécifie ledit au moins un bloc de données (406-408) extrait du groupe de données de stockage spécifié stocké dans le dispositif de stockage (105), conformément aux informations d'allocation (409) contenues dans les données de distribution reçues ;
crée, en utilisant les informations d'allocation, un fichier de données analogues (410), à partir dudit au moins un bloc de données (406-408) extrait du groupe de données de stockage spécifié, le fichier de données analogues (410) se distinguant du fichier de données d'objet (114) par les données de différence ; et
reconstruit le fichier de données d'objet (114) en utilisant le fichier de données analogues créé (410) et les données de différence (412, 801).

9. Procédé selon la revendication 8, dans lequel le procédé inclut en outre les étapes ci-dessous dans lesquelles,
l'appareil serveur (102) :
extrait, du groupe de données de stockage spécifié, une pluralité de blocs de données (406-408), dont chacun est similaire, au niveau des octets, à un bloc de données (403-405) du fichier de données d'objet (114) ;
couple ensemble les blocs de données extraits (406-408), en vue de créer par conséquent le fichier de données analogues (410) ; et
contient, dans les informations d'allocation (409), des adresses et des tailles de blocs, ainsi que des ordres de couplage des blocs de données extraits (406-408) à coupler ensemble pour la création du fichier de données analogues (410), dans lequel
le dispositif client (101) spécifie le fichier de données analogues (410) obtenu en couplant les blocs de données extraits (406-408) qui sont stockés dans le dispositif de stockage (105), conformément aux informations d'allocation (409) reçues.

10. Procédé selon la revendication 8, dans lequel le procédé inclut en outre les étapes ci-dessous dans lesquelles
l'appareil serveur (102) :
gère des informations d'identification pour spécifier chaque dispositif client (101) et des informations de version de données qui sont stockées dans chaque dispositif client ; et
le dispositif client (101) :
met en œuvre une transmission (703) d'informations d'identification spécifiant le dispositif client (101) et d'informations de version de données stockées dans le dispositif client, au l'appareil serveur (102), dans lequel
l'appareil serveur (102) spécifie un groupe de données stocké dans le dispositif de stockage du dispositif client (101), sur la base des informations d'identification et des informations de version telles que reçues en provenance du dispositif client (101).
